# EUROPEAN PATENT APPLICATION

(11) **EP 4 694 057 A1**
(43) Date of publication of application: **11.02.2026**
(21) Application number: 23934596.0
(22) Date of filing: 28.04.2023
(51) Int. Cl.: H04L 41/082

(54) **UPGRADE METHOD AND RELATED DEVICE**

(71) Applicant: Shenzhen Yinwang Intelligent Technologies Co., Ltd., Shenzhen, Guangdong 518110 (CN)
(72) Inventor: LIU, Qiong, Shenzhen, Guangdong 518129 (CN); ZHU, Cheng, Shenzhen, Guangdong 518129 (CN); YANG, Zhiyuan, Shenzhen, Guangdong 518129 (CN)
(74) Representative: Gill Jennings & Every LLP
(86) International application number: PCT/CN2023/091578
(87) International publication number: WO 2024/221404

(57) **Abstract**

An update method and a related apparatus are provided, and are applied to the field of connected vehicle technologies. The method is applied to a vehicle, and the vehicle includes a first node, a second node, a first electronic control unit ECU, and a second electronic control unit ECU. The first ECU is connected to the second node. The method includes: The first node sends first information, where the first information indicates to disable a function of receiving and sending a first packet by the first ECU; and the first node sends second information, where the second information indicates perform over the air OTA update on the first ECU. When OTA update is performed on the first ECU, the function of receiving and sending the first packet by the first ECU is disabled, a function of receiving and sending the first packet by the second ECU is enabled, and the second ECU is different from the first ECU. This method can ensure, in a process of performing OTA update on some ECUs, a normal service function of another ECU on which OTA update is not performed.

## Description

### TECHNICAL FIELD

This application relates to the field of connected vehicle technologies, and in particular, to an update method and a related apparatus.

### BACKGROUND

Over the air (over the air, OTA) is a technology for downloading data through a wireless network, and is currently widely applied to update of devices such as vehicles, televisions, mobile phones, tablet computers, or set-top boxes. For example, for a vehicle, OTA can be used to update or repair vehicle software remotely. A software manager can upload a software version to a cloud, which can be downloaded automatically or by a user from the cloud to update local software, so as to implement function upgrade or function update of a local vehicle system. For example, an electronic control unit (electronic control unit, ECU) of the vehicle can be updated by using OTA, and vehicle performance can be updated by updating the ECU. The OTA technology is being applied more extensively because of the convenience of OTA update.

However, to ensure a flashing success rate during OTA update, application packet communication of the entire vehicle is disabled. Because bottom-layer service communication is interrupted, the ECU of the entire vehicle may fail to provide a normal service function during OTA update.

### SUMMARY

Embodiments of this application provide an update method and a related apparatus, to ensure, in a process of performing OTA update on some ECUs, a normal service function of another ECU on which OTA update is not performed.

According to a first aspect, an embodiment of this application provides an update method, and the method may be performed by a communication apparatus. The communication apparatus may be a device, or may be a chip (system) or a circuit used for a device. This is not limited in this application. The method is applied to a vehicle. The vehicle includes a first node, a second node, a first electronic control unit ECU, and a second electronic control unit ECU, and the first ECU is connected to the second node. The method includes:

The first node sends first information, where the first information indicates to disable a function of receiving and sending a first packet by the first ECU; and
the first node sends second information, where the second information is used to perform over the air OTA update on the first ECU.

When OTA update is performed on the first ECU, a function of receiving and sending the first packet by the first ECU is disabled, a function of receiving and sending the first packet by the second ECU is enabled, and the second ECU is different from the first ECU.

In embodiments of this application, the update method is provided, and is applied to the vehicle. The first node of the vehicle sends the first information and the second information. The first information indicates to disable the function of sending and receiving the first packet by the first ECU connected to the second node of the vehicle. The second information is used to perform OTA update on the first ECU. The first node of the vehicle sends the first information and the second information, so that the function of sending and receiving the first packet by the first ECU can be disabled when OTA update is performed on the first ECU. In addition, the function of receiving and sending the first packet by the second ECU of the vehicle is enabled.

In embodiments of this application, the function of receiving and sending the first packet by the first ECU may be understood as that the first packet is received and sent based on communication through an in-vehicle wired network connected to the first ECU. Correspondingly, disabling the function of receiving and sending the first packet by the first ECU may be understood as disabling a communication function of the in-vehicle wired network connected to the first ECU.

Compared with that in a currently commonly used OTA update method in which application packet communication of the entire vehicle is disabled to ensure a flashing success rate, in the update method in embodiments of this application, the first information and the second information can be sent to the specific node (the second node) in the vehicle in a sending manner, for example, multicast sending or point-to-point sending, to indicate to disable a function of sending and receiving the first packet by an ECU connected to the second node, so as to perform OTA update on the ECU connected to the second node. In addition, an ECU connected to a node (a node other than the second node) that does not receive the first information and the second information can normally receive and send the first packet, and provide a normal service function. According to embodiments of this application, in a process of performing OTA update on some ECUs, a normal service function of another ECU on which OTA update is not performed can be ensured.

It may be understood that the vehicle may be replaced with a terminal device, and the terminal device may be a terminal device that needs to download data through a wireless network to update local software, for example, an uncrewed aerial vehicle, an airborne vehicle, a ship, or a mobile robot.

In a possible implementation, a processing priority of an update packet corresponding to OTA update is lower than a processing priority of the first packet.

In this implementation of this application, a possible specific implementation of the processing priority of the first packet is provided. Specifically, the processing priority of the update packet corresponding to OTA update is lower than the processing priority of the first packet.

In embodiments of this application, an update packet corresponding to OTA update may be a diagnosis packet, may be specifically a diagnosis packet in a unified diagnostic service (unified diagnosis service, UDS) standard protocol, and is used to perform diagnostic packet flashing on the ECU to implement OTA update. The first packet in embodiments of this application may be an application packet, and may be specifically an application packet for bottom-layer service communication in the vehicle, and is used to ensure that each ECU in the vehicle provides a normal service function.

In embodiments of this application, in a vehicle-mounted bus architecture, the processing priority of the update packet (the diagnosis packet) corresponding to OTA update is lower than a processing priority of an application packet (the first packet) for bottom-layer service communication in the vehicle. Therefore, to avoid a frame loss of flashing during OTA update on the first ECU, the first node sends the first information to indicate to disable the function of receiving and sending the first packet by the first ECU connected to the second node, to make way for diagnosis packet flashing during OTA update. This can ensure a success rate of diagnosis packet flashing, and implement OTA update of the first ECU.

In a possible implementation, the vehicle further includes a third node, the third node is different from the second node, and the second ECU is an ECU connected to the third node.

In this implementation of this application, a possible specific implementation of the second ECU is provided. Specifically, the second ECU is different from the first ECU, the second ECU is an ECU connected to the third node, the first ECU is an ECU connected to the second node, and the third node and the second node are different nodes in the vehicle.

The second node and the third node in embodiments of this application may be understood as nodes such as vehicle integration units (vehicle integration units, VIUs) or virtual private gateways (virtual private gateways, VGWs) in the vehicle, that are configured to forward information and implement a network interconnection function. The second node and the third node are separately connected to one or more ECUs. These ECUs receive and send packets by using a packet routing and forwarding function of the second node or the third node, to implement bottom-layer service communication in the vehicle, so as to provide a corresponding service function.

In embodiments of this application, in a scenario in which there are a plurality of nodes (VIUs/VGWs) in the vehicle, a plurality of ECUs in the vehicle can be grouped based on different VIUs/VGWs. A plurality of ECUs connected to a same VIU/VGW are considered as ECUs in one group, and a plurality of ECUs connected to different VIUs/VGWs are considered as ECUs in different groups. The first information and the second information are sent to a specific VIU/VGW (the second node) in the vehicle, to indicate to disable functions of receiving and sending the first packet by ECUs that are in a same group and that are connected to the VIU/VGW (the second node), to disable communication packet receiving and sending functions of some VIUs/VGWs (the second node) in the vehicle, so as to perform OTA update on the ECUs that are in the same group and that are connected to the VIU/VGW (the second node). In addition, it is ensured that a communication packet of an ECU connected to another VIU/VGW (the third node) that does not receive the first information and the second information is normally received and sent, to provide a normal service function.

In a possible implementation, the first information further indicates to disable a function of receiving and sending the first packet by the second node.

In this implementation of this application, a possible specific implementation of the first information is provided. Specifically, the first information further indicates to disable the function of receiving and sending the first packet by the second node. In the scenario in which there are a plurality of nodes (VIUs/VGWs) in the vehicle, the first information is sent to a specific node (the second node) in the vehicle, to indicate to disable the function of sending and receiving the first packet by the ECU connected to the second node, and indicate to disable a function of routing and forwarding the first packet by the second node, to disable communication packet receiving and sending functions of some nodes (the second node) in the vehicle, so as to perform OTA update on an ECU connected to the node.

Optionally, the first node further sends indication information, to indicate to enable a function of receiving and sending the first packet by the third node.

Optionally, the indication information further indicates to enable a function of receiving and sending the first packet by an ECU connected to the third node.

Optionally, the indication information and the first information may be carried in different packets, or the indication information and the first information may be carried in different fields of a same packet.

Optionally, the function of receiving and sending the first packet by the third node is enabled by default.

Optionally, the function of receiving and sending the first packet by the ECU connected to the third node is enabled by default.

In a possible implementation, the first ECU is an ECU connected to a first in-vehicle wired network, the second ECU is an ECU connected to a second in-vehicle wired network, and the first in-vehicle wired network and the second in-vehicle wired network are two different in-vehicle wired networks connected to the second node.

In this implementation of this application, a possible specific implementation of the second ECU is provided. Specifically, the second ECU is different from the first ECU, the second ECU is an ECU connected to the second-vehicle wired network, the first ECU is an ECU connected to the first-vehicle wired network, and the first-vehicle wired network and the second-vehicle wired network are two different in-vehicle wired networks connected to the second node.

The second node in embodiments of this application may be understood as a node, for example, a vehicle integration unit (vehicle integration unit, VIU) or a virtual private gateway (virtual private gateway, VGW) in the vehicle, that is configured to forward information and implement a network interconnection function. The second node is connected to a plurality of in-vehicle wired networks, and each in-vehicle wired network is connected to one or more ECUs. These ECUs receive and send, through the in-vehicle wired networks connected to the ECUs, packets by using a packet routing and forwarding function of the second node, to implement bottom-layer service communication in the vehicle, so as to provide a corresponding service function.

In embodiments of this application, for a scenario in which a plurality of in-vehicle wired networks are connected to the second node in the vehicle, the plurality of ECUs in the vehicle may be grouped based on different in-vehicle wired networks. A plurality of ECUs connected to a same in-vehicle wired network are considered as ECUs in one group, and a plurality of ECUs connected to different in-vehicle wired networks are considered as ECUs in different groups. The first information and the second information are sent to a specific node (the second node) in the vehicle, to indicate to disable functions of sending and receiving the first packet by ECUs that are in a same group and that are connected to one or more in-vehicle wired networks (the first in-vehicle wired network) connected to the second node, to disable communication packet receiving and sending functions of some in-vehicle wired networks (the first in-vehicle wired network) connected to the second node in the vehicle, so as to perform OTA update on ECUs that are in a same group and that are connected to the in-vehicle wired network (the first in-vehicle wired network). In addition, it is ensured that a communication packet of an ECU connected to another in-vehicle wired network (the second in-vehicle wired network) connected to the second node in the vehicle is normally received and sent, to provide a normal service function.

In a possible implementation, the first in-vehicle wired network and the second in-vehicle wired network correspond to a same wired network standard, for example, both are controller area networks CANs or both are Ethernet.

In this implementation of this application, a possible specific implementation of the in-vehicle wired network is provided. Specifically, the first in-vehicle wired network and the second in-vehicle wired network that are connected to the second node correspond to a same wired network standard, and may be both controller area networks (controller area networks, CANs), or may be both Ethernet. It may be understood that, when the first in-vehicle wired network is a first CAN bus, and the second in-vehicle wired network is a second CAN bus, the first information and the second information may be sent to a specific node (the second node) in the vehicle, to indicate to disable functions of receiving and sending the first packet by ECUs that are in a same group and that are connected to the first CAN bus connected to the second node, to disable communication packet receiving and sending functions of some CAN buses (the first CAN bus) connected to the second node in the vehicle, so as to perform OTA update on ECUs that are in a same group and that are connected to the CAN buses (the first CAN bus). In addition, it is ensured that a communication packet of an ECU connected to another CAN bus (the second CAN bus) that is connected to the second node in the vehicle is normally received and sent, to provide a normal service function.

In a possible implementation, the method further includes:
The first node sends third information, where the third information indicates to disable a function of receiving and sending, by the second node, a first packet corresponding to the first in-vehicle wired network.

In this implementation of this application, a possible specific implementation of disabling the function of receiving and sending, by the second node, the first packet corresponding to the first in-vehicle wired network is provided. Specifically, the first node sends the third information. The third information indicates to disable the function of receiving and sending, by the second node, the first packet corresponding to the first in-vehicle wired network. In a scenario in which a plurality of in-vehicle wired networks are connected to the second node in the vehicle, ECUs connected to some in-vehicle wired networks (the first in-vehicle wired network) that are connected to the second node need to disable functions of receiving and sending the first packet, to perform OTA update, and an ECU connected to another in-vehicle wired network (the second in-vehicle wired network) that is connected to the second node needs to enable a function of receiving and sending the first packet, to provide a normal service function. Therefore, a function of routing and forwarding the first packet by the second node cannot be completely disabled. According to embodiments of this application, the third information may be sent to a specific node (the second node) in the vehicle in a sending manner, for example, multicast sending or point-to-point sending, to indicate to disable a function of routing and forwarding, by the second node, the first packet corresponding to the first in-vehicle wired network, to disable communication packet receiving and sending functions of some in-vehicle wired networks (the first in-vehicle wired network) connected to the second node, so as to perform OTA update on ECUs connected to the in-vehicle wired networks (the first in-vehicle wired network).

In a possible implementation, the third information further indicates to enable a function of receiving and sending, by the second node, a first packet corresponding to the second in-vehicle wired network.

In this implementation of this application, a possible specific implementation of enabling the function of receiving and sending, by the second node, the first packet corresponding to the second in-vehicle wired network is provided. Specifically, the third information indicates to enable the function of receiving and sending, by the second node, the first packet corresponding to the second in-vehicle wired network. In a scenario in which a plurality of in-vehicle wired networks are connected to the second node in the vehicle, ECUs connected to some in-vehicle wired networks (the first in-vehicle wired network) that are connected to the second node need to disable functions of receiving and sending the first packet, to perform OTA update, and an ECU connected to another in-vehicle wired network (the second in-vehicle wired network) that is connected to the second node needs to enable a function of receiving and sending the first packet, to provide a normal service function. Therefore, a function of routing and forwarding the first packet by the second node cannot be completely disabled. According to embodiments of this application, the third information may be sent to a specific node (the second node) in the vehicle in a sending manner, for example, multicast sending or point-to-point sending, to indicate to enable a function of routing and forwarding, by the second node, the first packet corresponding to the second vehicle wired network, to enable communication packets of some vehicle wired networks (the second vehicle wired network) connected to the second node, so as to ensure that an ECU connected to the second in-vehicle wired network can provide a normal service function when OTA update is performed on an ECU connected to the first in-vehicle wired network.

Optionally, the function of receiving and sending, by the second node, the first packet corresponding to the second in-vehicle wired network is enabled by default.

Optionally, a function of receiving and sending the first packet by an ECU connected to the second in-vehicle wired network is enabled by default.

Optionally, the third information and the first information may be carried in different packets, or the third information and the first information may be carried in different fields of a same packet.

In a possible implementation, the first information includes at least a first field and a second field, the first field indicates whether a function of receiving and sending the first packet by an ECU connected to the second node is disabled, and the second field indicates whether a function of receiving and sending the first packet by an ECU connected to the third node is disabled.

In this implementation of this application, a possible specific implementation of the first information is provided. Specifically, the first information includes at least the first field and the second field. The first field corresponds to the second node, and indicates whether a function of receiving and sending the application packet by the ECU connected to the second node is disabled. The second field corresponds to the third node, and indicates whether a function of receiving and sending the application packet by the ECU connected to the third node is disabled. According to embodiments of this application, in a process of performing OTA update on some ECUs, a normal service function of another ECU on which OTA update is not performed can be ensured.

In a possible implementation, the method further includes:
The first node sends fourth information, where the fourth information indicates to disable functions of sending and receiving the first packet by all or some ECUs in the vehicle.

In this implementation of this application, a possible specific implementation of disabling a function of the ECU in the vehicle is provided. Specifically, the first node sends fourth information, and the fourth information indicates to disable the functions of sending and receiving the first packet by all or some ECUs in the vehicle. According to embodiments of this application, the entire vehicle may be silent, to perform OTA update on the entire vehicle, or some ECUs may be silent, to perform OTA update on the silent ECUs.

According to a second aspect, an embodiment of this application provides an update method, and the method may be performed by a communication apparatus. The communication apparatus may be a device, or may be a chip (system) or a circuit used for a device. This is not limited in this application. The method is applied to a vehicle. The vehicle includes a first node, a second node, a first electronic control unit ECU, and a second electronic control unit ECU, and the first ECU is connected to the second node. The method includes:

The second node receives first information from a first node, where the first information indicates to disable a function of receiving and sending a first packet by a first ECU; and
the second node receives second information from the first node, where the second information is used to perform over the air OTA update on the first ECU.

When OTA update is performed on the first ECU, a function of receiving and sending the first packet by the first ECU is disabled, a function of receiving and sending the first packet by the second ECU is enabled, and the second ECU is different from the first ECU.

In embodiments of this application, the update method is provided, and is applied to the vehicle. The second node of the vehicle receives the first information and the second information from the first node. The first information indicates to disable the function of sending and receiving the first packet by the first ECU connected to the second node of the vehicle. The second information is used to perform OTA update on the first ECU. The first node of the vehicle sends the first information and the second information, so that the function of sending and receiving the first packet by the first ECU can be disabled when OTA update is performed on the first ECU. In addition, the function of receiving and sending the first packet by the second ECU of the vehicle is enabled.

In embodiments of this application, the function of receiving and sending the first packet by the first ECU may be understood as that the first packet is received and sent based on communication through an in-vehicle wired network connected to the first ECU. Correspondingly, disabling the function of receiving and sending the first packet by the first ECU may be understood as disabling a communication function of the in-vehicle wired network connected to the first ECU.

Compared with that in a currently commonly used OTA update method in which application packet communication of the entire vehicle is disabled to ensure a flashing success rate, in the update method in embodiments of this application, the first information and the second information can be sent to the specific node (the second node) in the vehicle in a sending manner, for example, multicast sending or point-to-point sending, to indicate to disable a function of sending and receiving the first packet by an ECU connected to the second node, so as to perform OTA update on the ECU connected to the second node. In addition, an ECU connected to a node (a node other than the second node) that does not receive the first information and the second information can normally receive and send the first packet, and provide a normal service function. According to embodiments of this application, in a process of performing OTA update on some ECUs, a normal service function of another ECU on which OTA update is not performed can be ensured.

It may be understood that the vehicle may be replaced with a terminal device, and the terminal device may be a terminal device that needs to download data through a wireless network to update local software, for example, an uncrewed aerial vehicle, an airborne vehicle, a ship, or a mobile robot.

In a possible implementation, a processing priority of an update packet corresponding to OTA update is lower than a processing priority of the first packet.

In this implementation of this application, a possible specific implementation of the processing priority of the first packet is provided. Specifically, the processing priority of the update packet corresponding to OTA update is lower than the processing priority of the first packet.

In embodiments of this application, an update packet corresponding to OTA update may be a diagnosis packet, may be specifically a diagnosis packet in a unified diagnostic service (unified diagnosis service, UDS) standard protocol, and is used to perform diagnostic packet flashing on the ECU to implement OTA update. The first packet in embodiments of this application may be an application packet, and may be specifically an application packet for bottom-layer service communication in the vehicle, and is used to ensure that each ECU in the vehicle provides a normal service function.

In embodiments of this application, in a vehicle-mounted bus architecture, the processing priority of the update packet (the diagnosis packet) corresponding to OTA update is lower than a processing priority of an application packet (the first packet) for bottom-layer service communication in the vehicle. Therefore, to avoid a frame loss of flashing during OTA update on the first ECU, the first node sends the first information to indicate to disable the function of receiving and sending the first packet by the first ECU connected to the second node, to make way for diagnosis packet flashing during OTA update. This can ensure a success rate of diagnosis packet flashing, and implement OTA update of the first ECU.

In a possible implementation, the vehicle further includes a third node, the third node is different from the second node, and the second ECU is an ECU connected to the third node.

In this implementation of this application, a possible specific implementation of the second ECU is provided. Specifically, the second ECU is different from the first ECU, the second ECU is an ECU connected to the third node, the first ECU is an ECU connected to the second node, and the third node and the second node are different nodes in the vehicle.

The second node and the third node in embodiments of this application may be understood as nodes such as vehicle integration units (vehicle integration units, VIUs) or virtual private gateways (virtual private gateways, VGWs) in the vehicle, that are configured to forward information and implement a network interconnection function. The second node and the third node are separately connected to one or more ECUs. These ECUs receive and send packets by using a packet routing and forwarding function of the second node or the third node, to implement bottom-layer service communication in the vehicle, so as to provide a corresponding service function.

In embodiments of this application, in a scenario in which there are a plurality of nodes (VIUs/VGWs) in the vehicle, a plurality of ECUs in the vehicle can be grouped based on different VIUs/VGWs. A plurality of ECUs connected to a same VIU/VGW are considered as ECUs in one group, and a plurality of ECUs connected to different VIUs/VGWs are considered as ECUs in different groups. The first information and the second information are sent to a specific VIU/VGW (the second node) in the vehicle, to indicate to disable functions of receiving and sending the first packet by ECUs that are in a same group and that are connected to the VIU/VGW (the second node), to disable communication packet receiving and sending functions of some VIUs/VGWs (the second node) in the vehicle, so as to perform OTA update on the ECUs that are in the same group and that are connected to the VIU/VGW (the second node). In addition, it is ensured that a communication packet of an ECU connected to another VIU/VGW (the third node) that does not receive the first information and the second information is normally received and sent, to provide a normal service function.

In a possible implementation, the first information further indicates to disable a function of receiving and sending the first packet by the second node.

In this implementation of this application, a possible specific implementation of the first information is provided. Specifically, the first information further indicates to disable the function of receiving and sending the first packet by the second node. In the scenario in which there are a plurality of nodes (VIUs/VGWs) in the vehicle, the first information is sent to a specific node (the second node) in the vehicle, to indicate to disable the function of sending and receiving the first packet by the ECU connected to the second node, and indicate to disable a function of routing and forwarding the first packet by the second node, to disable communication packet receiving and sending functions of some nodes (the second node) in the vehicle, so as to perform OTA update on an ECU connected to the node.

In a possible implementation, the first ECU is an ECU connected to a first in-vehicle wired network, the second ECU is an ECU connected to a second in-vehicle wired network, and the first in-vehicle wired network and the second in-vehicle wired network are two different in-vehicle wired networks connected to the second node.

In this implementation of this application, a possible specific implementation of the second ECU is provided. Specifically, the second ECU is different from the first ECU, the second ECU is an ECU connected to the second-vehicle wired network, the first ECU is an ECU connected to the first-vehicle wired network, and the first-vehicle wired network and the second-vehicle wired network are two different in-vehicle wired networks connected to the second node.

The second node in embodiments of this application may be understood as a node, for example, a vehicle integration unit (vehicle integration unit, VIU) or a virtual private gateway (virtual private gateway, VGW) in the vehicle, that is configured to forward information and implement a network interconnection function. The second node is connected to a plurality of in-vehicle wired networks, and each in-vehicle wired network is connected to one or more ECUs. These ECUs receive and send, through the in-vehicle wired networks connected to the ECUs, packets by using a packet routing and forwarding function of the second node, to implement bottom-layer service communication in the vehicle, so as to provide a corresponding service function.

In embodiments of this application, for a scenario in which a plurality of in-vehicle wired networks are connected to the second node in the vehicle, the plurality of ECUs in the vehicle may be grouped based on different in-vehicle wired networks. A plurality of ECUs connected to a same in-vehicle wired network are considered as ECUs in one group, and a plurality of ECUs connected to different in-vehicle wired networks are considered as ECUs in different groups. The first information and the second information are sent to a specific node (the second node) in the vehicle, to indicate to disable functions of sending and receiving the first packet by ECUs that are in a same group and that are connected to one or more in-vehicle wired networks (the first in-vehicle wired network) connected to the second node, to disable communication packet receiving and sending functions of some in-vehicle wired networks (the first in-vehicle wired network) connected to the second node in the vehicle, so as to perform OTA update on ECUs that are in a same group and that are connected to the in-vehicle wired network (the first in-vehicle wired network). In addition, it is ensured that a communication packet of an ECU connected to another in-vehicle wired network (the second in-vehicle wired network) connected to the second node in the vehicle is normally received and sent, to provide a normal service function.

In a possible implementation, the first in-vehicle wired network and the second in-vehicle wired network correspond to a same wired network standard, for example, both are controller area networks CANs or both are Ethernet.

In this implementation of this application, a possible specific implementation of the in-vehicle wired network is provided. Specifically, the first in-vehicle wired network and the second in-vehicle wired network that are connected to the second node correspond to a same wired network standard, and may be both controller area networks (controller area networks, CANs), or may be both Ethernet. It may be understood that, when the first in-vehicle wired network is a first CAN bus, and the second in-vehicle wired network is a second CAN bus, the first information and the second information may be sent to a specific node (the second node) in the vehicle, to indicate to disable functions of receiving and sending the first packet by ECUs that are in a same group and that are connected to the first CAN bus connected to the second node, to disable communication packet receiving and sending functions of some CAN buses (the first CAN bus) connected to the second node in the vehicle, so as to perform OTA update on ECUs that are in a same group and that are connected to the CAN buses (the first CAN bus). In addition, it is ensured that a communication packet of an ECU connected to another CAN bus (the second CAN bus) that is connected to the second node in the vehicle is normally received and sent, to provide a normal service function.

In a possible implementation, the method further includes:
The second node receives third information from the first node, where the third information indicates to disable a function of receiving and sending, by the second node, a first packet corresponding to a first in-vehicle wired network.

In this implementation of this application, a possible specific implementation of disabling the function of receiving and sending, by the second node, the first packet corresponding to the first in-vehicle wired network is provided. Specifically, the second node receives third information from the first node. The third information indicates to disable the function of receiving and sending, by the second node, the first packet corresponding to the first in-vehicle wired network. In a scenario in which a plurality of in-vehicle wired networks are connected to the second node in the vehicle, ECUs connected to some in-vehicle wired networks (the first in-vehicle wired network) that are connected to the second node need to disable functions of receiving and sending the first packet, to perform OTA update, and an ECU connected to another in-vehicle wired network (the second in-vehicle wired network) that is connected to the second node needs to enable a function of receiving and sending the first packet, to provide a normal service function. Therefore, a function of routing and forwarding the first packet by the second node cannot be completely disabled. According to embodiments of this application, the third information may be sent to a specific node (the second node) in the vehicle in a sending manner, for example, multicast sending or point-to-point sending, to indicate to disable a function of routing and forwarding, by the second node, the first packet corresponding to the first in-vehicle wired network, to disable communication packet receiving and sending functions of some in-vehicle wired networks (the first in-vehicle wired network) connected to the second node, so as to perform OTA update on ECUs connected to the in-vehicle wired networks (the first in-vehicle wired network).

In a possible implementation, the third information further indicates to enable a function of receiving and sending, by the second node, a first packet corresponding to the second in-vehicle wired network.

In this implementation of this application, a possible specific implementation of enabling the function of receiving and sending, by the second node, the first packet corresponding to the second in-vehicle wired network is provided. Specifically, the third information indicates to enable the function of receiving and sending, by the second node, the first packet corresponding to the second in-vehicle wired network. In a scenario in which a plurality of in-vehicle wired networks are connected to the second node in the vehicle, ECUs connected to some in-vehicle wired networks (the first in-vehicle wired network) that are connected to the second node need to disable functions of receiving and sending the first packet, to perform OTA update, and an ECU connected to another in-vehicle wired network (the second in-vehicle wired network) that is connected to the second node needs to enable a function of receiving and sending the first packet, to provide a normal service function. Therefore, a function of routing and forwarding the first packet by the second node cannot be completely disabled. According to embodiments of this application, the third information may be sent to a specific node (the second node) in the vehicle in a sending manner, for example, multicast sending or point-to-point sending, to indicate to enable a function of routing and forwarding, by the second node, the first packet corresponding to the second vehicle wired network, to enable communication packets of some vehicle wired networks (the second vehicle wired network) connected to the second node, so as to ensure that an ECU connected to the second in-vehicle wired network can provide a normal service function when OTA update is performed on an ECU connected to the first in-vehicle wired network.

Optionally, the function of receiving and sending, by the second node, the first packet corresponding to the second in-vehicle wired network is enabled by default.

Optionally, a function of receiving and sending the first packet by an ECU connected to the second in-vehicle wired network is enabled by default.

Optionally, the third information and the first information may be carried in different packets, or the third information and the first information may be carried in different fields of a same packet.

In a possible implementation, the first information includes at least a first field and a second field, the first field indicates whether a function of receiving and sending the first packet by an ECU connected to the second node is disabled, and the second field indicates whether a function of receiving and sending the first packet by an ECU connected to the third node is disabled.

In this implementation of this application, a possible specific implementation of the first information is provided. Specifically, the first information includes at least the first field and the second field. The first field corresponds to the second node, and indicates whether a function of receiving and sending the application packet by the ECU connected to the second node is disabled. The second field corresponds to the third node, and indicates whether a function of receiving and sending the application packet by the ECU connected to the third node is disabled. According to embodiments of this application, in a process of performing OTA update on some ECUs, a normal service function of another ECU on which OTA update is not performed can be ensured.

In a possible implementation, the method further includes:
The second node receives fourth information from the first node, where the fourth information indicates to disable functions of sending and receiving the first packet by all or some ECUs in the vehicle.

In this implementation of this application, a possible specific implementation of disabling a function of the ECU in the vehicle is provided. Specifically, the first node sends fourth information, and the fourth information indicates to disable the functions of sending and receiving the first packet by all or some ECUs in the vehicle. According to embodiments of this application, the entire vehicle may be silent, to perform OTA update on the entire vehicle, or some ECUs may be silent, to perform OTA update on the silent ECUs.

According to a third aspect, an embodiment of this application provides a communication apparatus. The apparatus includes a module or a unit configured to perform the method according to any implementation of the first aspect.

In a possible design, the apparatus includes:
a communication unit, configured to send first information, where the first information indicates to disable a function of receiving and sending a first packet by a first ECU.

The communication unit is further configured to send second information, where the second information is used to perform over the air OTA update on the first ECU.

When OTA update is performed on the first ECU, the function of receiving and sending the first packet by the first ECU is disabled, a function of receiving and sending the first packet by a second ECU is enabled, and the second ECU is different from the first ECU.

In a possible implementation, the apparatus further includes:
a processing unit, configured to generate the first information and/or the second information.

In a possible implementation, a processing priority of an update packet corresponding to OTA update is lower than a processing priority of the first packet.

In a possible implementation, a third node is different from a second node, and the second ECU is an ECU connected to the third node.

In a possible implementation, the first information further indicates to disable a function of receiving and sending the first packet by the second node.

In a possible implementation, the first ECU is an ECU connected to a first in-vehicle wired network, the second ECU is an ECU connected to a second in-vehicle wired network, and the first in-vehicle wired network and the second in-vehicle wired network are two different in-vehicle wired networks connected to the second node.

In a possible implementation, the first in-vehicle wired network and the second in-vehicle wired network correspond to a same wired network standard, for example, both are controller area networks CANs or both are Ethernet.

In a possible implementation, the communication unit is further configured to send third information, where the third information indicates to disable a function of receiving and sending, by the second node, a first packet corresponding to the first in-vehicle wired network.

In a possible implementation, the third information further indicates to enable a function of receiving and sending, by the second node, a first packet corresponding to a second in-vehicle wired network.

In a possible implementation, the first information includes at least a first field and a second field, the first field indicates whether a function of receiving and sending the first packet by an ECU connected to the second node is disabled, and the second field indicates whether a function of receiving and sending the first packet by an ECU connected to the third node is disabled.

In a possible implementation, the communication unit is further configured to send fourth information, where the fourth information indicates to disable a function of sending and receiving the first packet by all or some ECUs in the vehicle.

For technical effect brought by the third aspect and any possible implementation, refer to the descriptions of the technical effect corresponding to the first aspect and the corresponding implementation.

According to a fourth aspect, an embodiment of this application provides a communication apparatus. The apparatus includes a module or a unit configured to perform the method according to any implementation of the second aspect.

In a possible design, the apparatus includes:
a communication unit, configured to receive first information from a first node, where the first information indicates to disable a function of receiving and sending a first packet by a first ECU.

The communication unit is further configured to receive second information from the first node, where the second information is used to perform over the air OTA update on the first ECU.

When OTA update is performed on the first ECU, the function of receiving and sending the first packet by the first ECU is disabled, a function of receiving and sending the first packet by a second ECU is enabled, and the second ECU is different from the first ECU.

In a possible implementation, the apparatus further includes:
a processing unit, configured to determine to forward the first information and/or the second information to the first ECU.

In a possible implementation, a processing priority of an update packet corresponding to OTA update is lower than a processing priority of the first packet.

In a possible implementation, a third node is different from the communication apparatus, and the second ECU is an ECU connected to the third node.

In a possible implementation, the first information further indicates to disable a function of receiving and sending the first packet by the communication apparatus.

In a possible implementation, the first ECU is an ECU connected to a first in-vehicle wired network, the second ECU is an ECU connected to a second in-vehicle wired network, and the first in-vehicle wired network and the second in-vehicle wired network are two different in-vehicle wired networks connected to the communication apparatus.

In a possible implementation, the first in-vehicle wired network and the second in-vehicle wired network correspond to a same wired network standard, for example, both are controller area networks CANs or both are Ethernet.

In a possible implementation, the communication unit is further configured to receive third information from the first node, where the third information indicates to disable a function of receiving and sending, by the communication apparatus, a first packet corresponding to the first in-vehicle wired network.

In a possible implementation, the third information further indicates to enable a function of receiving and sending, by the communication apparatus, a first packet corresponding to the second in-vehicle wired network.

In a possible implementation, the first information includes at least a first field and a second field, the first field indicates whether a function of receiving and sending the first packet by an ECU connected to the communication apparatus is disabled, and the second field indicates whether a function of receiving and sending the first packet by an ECU connected to the third node is disabled.

In a possible implementation, the communication unit is further configured to receive fourth information from the first node, where the fourth information indicates to disable functions of sending and receiving the first packet by all or some ECUs in a vehicle.

For technical effect brought by the fourth aspect and any possible implementation, refer to the descriptions of the technical effect corresponding to the second aspect and the corresponding implementation.

Optionally, in the communication apparatus according to any one of the third aspect and the fourth aspect and any possible implementation of the third aspect and the fourth aspect,
in an implementation, the communication apparatus is a communication device. When the communication apparatus is a communication device, the communication unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip (system) or a circuit used in a communication device. When the communication apparatus is a chip (system) or a circuit used in a communication device, the communication unit may be a communication interface (input/output interface), an interface circuit, an output circuit, an input circuit, a pin, a related circuit, or the like on the chip (system) or the circuit. The processing unit may be at least one processor, a processing circuit, a logic circuit, or the like.

According to a fifth aspect, an embodiment of this application provides a communication apparatus. The communication apparatus includes a processor. The processor is coupled to a memory, and may be configured to execute instructions in the memory, to implement the method according to any one of the first aspect and the second aspect and any possible implementation of the first aspect and the second aspect. Optionally, the communication apparatus further includes a memory. Optionally, the communication apparatus further includes a communication interface, and the processor is coupled to the communication interface.

According to a sixth aspect, an embodiment of this application provides a communication apparatus, including a logic circuit and a communication interface. The communication interface is configured to receive information or send information, and the logic circuit is configured to receive information or send information through the communication interface, to enable the communication apparatus to perform the method according to any one of the first aspect and the second aspect and any possible implementation of the first aspect and the second aspect.

According to a seventh aspect, an embodiment of this application provides a computer-readable storage medium. The computer-readable storage medium is configured to store a computer program (which may also be referred to as code or an instruction). When the computer program is run on a computer, the method according to any one of the first aspect and the second aspect and any possible implementation of the first aspect and the second aspect is implemented.

According to an eighth aspect, an embodiment of this application provides a computer program product. The computer program product includes a computer program (which may also be referred to as code or an instruction). When the computer program is run, a computer is enabled to perform the method according to any one of the first aspect and any possible implementation of the first aspect and the second aspect is implemented.

According to a ninth aspect, an embodiment of this application provides a chip. The chip includes a processor, and the processor is configured to execute instructions. When the processor executes the instructions, the chip is enabled to perform the method according to any one of the first aspect and any possible implementation of the first aspect and the second aspect. Optionally, the chip further includes a communication interface, and the communication interface is configured to receive a signal or send a signal.

According to a tenth aspect, an embodiment of this application provides a vehicle end. The vehicle end includes at least one of the communication apparatus according to the third aspect, the communication apparatus according to the fourth aspect, the communication apparatus according to the fifth aspect, the communication apparatus according to the sixth aspect, and the chip according to the ninth aspect.

According to an eleventh aspect, an embodiment of this application provides a system. The system includes a first node and a second node, the first node is configured to perform the method according to the first aspect and any possible implementation of the first aspect, and the second node is configured to perform the method according to the second aspect and any possible implementation of the second aspect.

In addition, in a process of performing the method according to any one of the first aspect and the second aspect and any possible implementation of the first aspect and the second aspect, a process related to sending information and/or receiving information and the like in the foregoing method may be understood as a process of outputting information by a processor, and/or a process of receiving input information by a processor. When outputting the information, the processor may output the information to a transceiver (or a communication interface or a sending module), so that the transceiver transmits the information. After the information is output by the processor, other processing may further need to be performed on the information before the information arrives at the transceiver. Similarly, when the processor receives the input information, the transceiver (or the communication interface or the sending module) receives the information, and inputs the information into the processor. Further, after the transceiver receives the information, other processing may need to be performed on the information before the information is input into the processor.

Based on the foregoing principle, for example, sending information in the foregoing method may be understood as outputting information by the processor. For another example, receiving information may be understood as receiving input information by the processor.

Optionally, operations such as transmission, sending, and receiving related to the processor may be more generally understood as operations such as output, receiving, and input of the processor, unless otherwise specified or provided that the operations do not contradict actual functions or internal logic of the operations in related descriptions.

Optionally, in a process of performing the method according to any one of the first aspect and the second aspect and any possible implementation of the first aspect and the second aspect, the processor may be a processor specially configured to perform these methods, or may be a processor, for example, a general-purpose processor, that performs these methods by executing computer instructions in a memory. The memory may be a non-transitory (non-transitory) memory, for example, a read-only memory (Read-Only Memory, ROM). The memory and the processor may be integrated on a same chip, or may be separately disposed on different chips. A type of the memory and a manner of disposing the memory and the processor are not limited in embodiments of this application.

In a possible implementation, at least one memory is located outside an apparatus.

In another possible implementation, at least one memory is located inside an apparatus.

In another possible implementation, some of the at least one memory is/are located in an apparatus, and the remaining is/are located outside the apparatus.

In this application, the processor and the memory may alternatively be integrated into one component. In other words, the processor and the memory may alternatively be integrated together.

In embodiments of this application, in a process of performing OTA update on some ECUs, a normal service function of another ECU on which OTA update is not performed can be ensured.

### BRIEF DESCRIPTION OF DRAWINGS

To describe the technical solutions in embodiments of this application more clearly, the following briefly describes the accompanying drawings for describing embodiments. It is clear that the accompanying drawings in the following descriptions show merely some embodiments of this application, and a person of ordinary skill in the art may derive other drawings from these accompanying drawings without creative efforts.
FIG. 1 is a diagram of an architecture of a vehicle update system according to an embodiment of this application;
FIG. 2 is a diagram of an architecture of a vehicle according to an embodiment of this application;
FIG. 3 is a diagram of an architecture of a vehicle based on a central computing architecture according to an embodiment of this application;
FIG. 4A is a diagram of a vehicle topology architecture according to an embodiment of this application;
FIG. 4B is a diagram of a vehicle topology architecture according to an embodiment of this application;
FIG. 5A is a diagram of an ECU programming procedure according to an embodiment of this application;
FIG. 5B is a diagram of an ECU programming procedure according to an embodiment of this application;
FIG. 6 is a diagram of a vehicle system update architecture according to an embodiment of this application;
FIG. 7 is a schematic flowchart of an update method according to an embodiment of this application;
FIG. 8A and FIG. 8B are a diagram of an OTA flashing procedure according to an embodiment of this application;
FIG. 9A to FIG. 9C are a diagram of an OTA flashing procedure according to an embodiment of this application;
FIG. 10 is a diagram of a structure of a communication apparatus according to an embodiment of this application;
FIG. 11 is a diagram of a structure of a communication apparatus according to an embodiment of this application; and
FIG. 12 is a diagram of a structure of a chip according to an embodiment of this application.

### DESCRIPTION OF EMBODIMENTS

To make objectives, technical solutions, and advantages of this application clearer, the following describes embodiments of this application with reference to the accompanying drawings in embodiments of this application.

The terms "first", "second", and the like in the specification, claims, and accompanying drawings of this application are used to distinguish between different objects, but are not used to describe a specific sequence. In addition, terms such as "include" and "have" and any other variants thereof are intended to cover a non-exclusive inclusion. For example, processes, methods, systems, products, or devices that include a series of steps or units is not limited to listed steps or units, but instead, optionally further include steps or units that are not listed, or optionally further include other steps or units inherent to these processes, methods, products, or devices.

"Embodiments" mentioned herein mean that specific features, structures, or characteristics described in combination with the embodiments may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that, in embodiments of this application, unless otherwise stated or there is a logic conflict, terms and/or descriptions in embodiments are consistent and may be mutually referenced, and technical features in different embodiments may be combined based on an internal logical relationship thereof, to form a new embodiment.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate that only A exists, only B exists, and both A and B exist, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c, where a, b, and c may be singular or plural.

It should be noted that in this application, "indication" may include a direct indication, an indirect indication, an explicit indication, and an implicit indication. When a piece of indication information is described as indicating A, it may be understood that the indication information carries A, directly indicates A, or indirectly indicates A.

In this application, information indicated by the indication information is referred to as to-be-indicated information. In a specific implementation process, the to-be-indicated information is indicated in a plurality of manners, for example, but not limited to, the following manners: The to-be-indicated information is directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmitting device by sending configuration information to a receiving device.

It should be noted that in this application, "sending" may be understood as "output", and "receiving" may be understood as "input". In "sending information to A", "to A" indicates only a direction of information transmission, A is a destination. "Sending information to A" is not limited to direct sending over an air interface. "Sending information to A" includes directly sending the information to A and indirectly sending the information to A by using a transmitter. Therefore, "sending information to A" may also be understood as "outputting the information to A". Similarly, "receiving information from A" indicates that a source of the information is A, includes directly receiving the information from A and indirectly receiving the information from A by using a receiver. Therefore, "receiving information from A" may also be understood as "inputting the information from A".

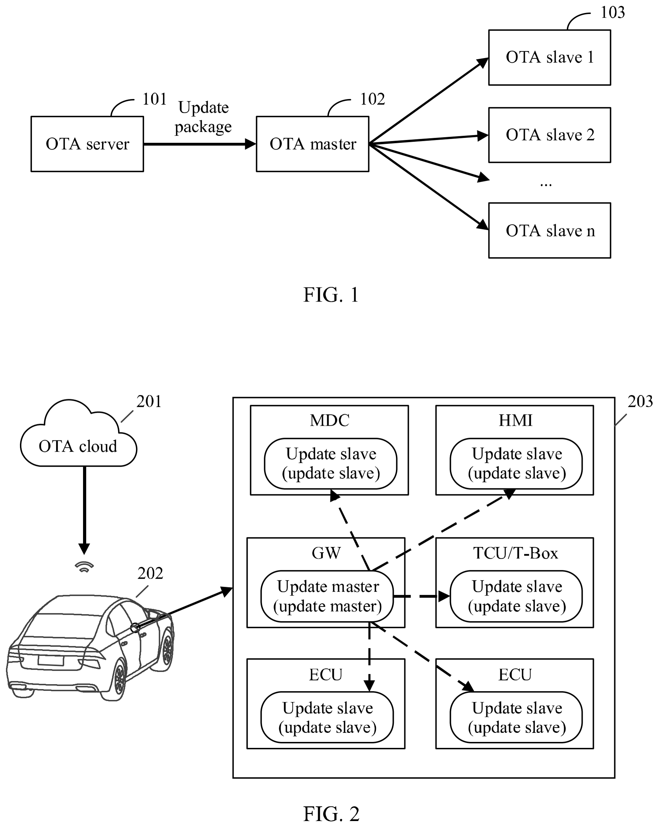

FIG. 1 is a diagram of a vehicle update system according to an embodiment of this application.

As shown in FIG. 1, the update system includes an OTA server (server) 101, an OTA master (Master) 102, and an OTA slave (slave) 103. Specifically, the OTA server 101 is configured to send an update data packet to the OTA master. In some specific implementation scenarios, the OTA server is also referred to as an OTA cloud.

The OTA master (Master) 102 is an electronic device having a data receiving and sending capability, may receive an update package sent by the OTA server 101, and update a component of a vehicle based on the update package. Specifically, the OTA master 102 distributes the received update package to one or more OTA slaves 103 in the vehicle, and indicates the one or more OTA slaves 103 to install and activate the update package, to complete update.

FIG. 2 is a diagram of a possible architecture of a vehicle according to an embodiment of this application.

As shown in FIG. 2, the vehicle architecture includes an OTA cloud 201 and a vehicle 202.

The vehicle 202 is a vehicle based on a vehicle electrical/electronic architecture (electrical/electronic architecture, E/E), referring to an area 203. The vehicle 202 may include the following components: modules such as a mobile data center (mobile data center, MDC), human-machine interaction (human-machine interaction, HMI), a gateway (gateway, GW), a telematics box (telematics box, T-Box, or referred to as TCU), and an electronic control unit (electronic control unit, ECU). The GW is a core component in the electrical/electronic architecture of the entire vehicle. As a data interaction hub of an entire vehicle network, the GW may route network data of a controller area network (controller area network, CAN), a local interconnect network (local interconnect network, LIN), media oriented system transport (media oriented system transport, MOST), and FlexRay in different networks. The MDC is an intelligent vehicle-mounted computing platform. The T-Box is mainly configured to communicate with the outside of the vehicle, a background system, and a mobile phone application (application, APP). The HMI is an infotainment system of the vehicle. The ECU is a special microcomputer controller of the vehicle.

An update master (update master, which may be considered as an OTA master) is deployed in the GW of the vehicle 202, and an update slave (update slave, which may be considered as an OTA slave) is deployed in each remaining module of the vehicle 202. The update master in the GW receives an update package sent by the OTA cloud, and distributes the update package to an update slave of a corresponding component, so that the update slave installs and activates the update package, to complete update of the component. It can be learned that the update package of the entire vehicle is downloaded by the update master in the GW, and each component is indicated to install the update package. This brings a heavy burden to storage and load of the update master. For example, if the update package is large, storage space of the update master may be insufficient.

In addition, because the vehicle 202 in FIG. 2 is the vehicle based on the electronic/electrical architecture, and the GW is the core component in the electronic/electrical architecture of the entire vehicle, the update master may be deployed in the GW, to reduce routing complexity. However, in another vehicle architecture, as a quantity of components increases, a structure is complex. If the update master updates an ECU that is far away from the update master (far away from the update master may be understood as that a large quantity of hops need to be passed from the update master to the to-be-updated ECU), vehicle update efficiency is also affected.

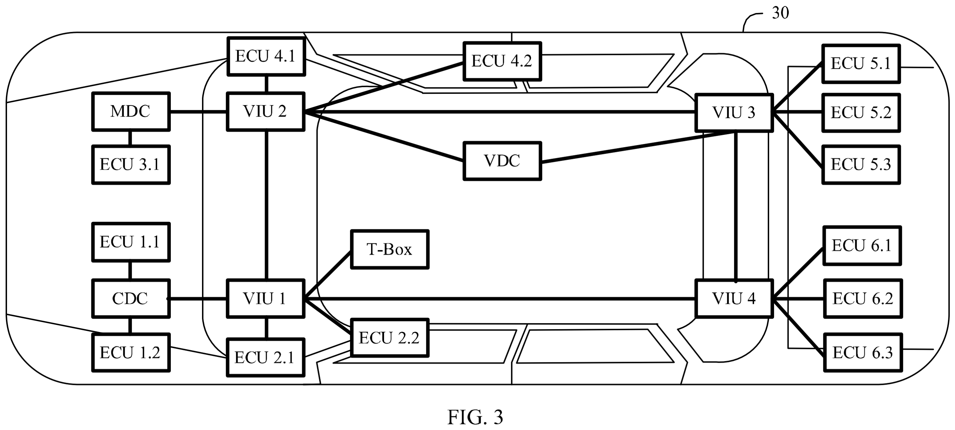

FIG. 3 is a diagram of an architecture of a vehicle based on a central computing architecture according to an embodiment of this application.

As shown in FIG. 3, a vehicle 30 is a vehicle based on a central computing architecture (central computing architecture, CCA). The CCA includes several vehicle integration units (vehicle integrated/integration units, VIUs) and a plurality of vehicle components. The plurality of VIUs form a ring network, to implement a high bandwidth (high-definition camera and high-definition display), a low latency, and a high-reliability processing capability to continuously improve competitiveness, simplify vehicle-mounted network configuration, and improve update and maintenance efficiency. The vehicle component (for example, an ECU and a T-Box) can be connected to the VIU, or connected to a domain controller (domain controller, DC), for example, a cockpit domain controller (cockpit domain controller, CDC), an MDC, and a vehicle domain controller (vehicle domain controller, VDC), and then connected to the VIU through the DC. In this way, a case in which each vehicle component in a conventional system for implementing an electronic control function in a vehicle needs to be connected to a domain control unit DC through a respective harness is avoided. This helps reduce a length of the harness in the system for implementing the electronic control function in the vehicle.

It may be understood that, compared with the automobile electrical/electronic (electrical/electronic architecture, E/E) used by the vehicle 202 in FIG. 2, in a plurality of components of the vehicle 30, some components are connected to a VIU 1 (for example, an ECU 2.1, an ECU 2.2, or a T-Box), some components are connected to a VIU 2 (for example, an ECU 4.1, an ECU 4.2, or an ECU 4.3), some components are connected to a VIU 3 (for example, an ECU 5.1, an ECU 5.2, or an ECU 5.3), and some components are connected to a VIU 4 (for example, an ECU 6.1, an ECU 6.2, or an ECU 6.3). In this case, if an update master is deployed in the T-Box, for the ECU 5.1 that needs to be updated, a path of a distributed update package passes through a bus of the VIU 1, the VIU 2, and the VIU 3, and then passes through the VIU 3 to the ECU 5.1. It can be learned that, because an update route is complex (which may be understood as that a large quantity of hops need to be passed), complexity of vehicle update is improved and efficiency is also affected in a manner of distributing the update package by a primary update node.

It should be noted that, in the architecture shown in FIG. 3, a connection line in each node may be an Ethernet-based bus, or may be one or more of a controller area network (controller area network, CAN) bus, a local interconnect network (local interconnect network, LIN) bus, a media oriented system transport (media oriented system transport, MOST) bus, a FlexRay, and the like.

It may be understood that the diagram of the vehicle update system shown in FIG. 1 is merely an example, and the diagrams of the vehicle architectures shown in FIG. 2 and FIG. 3 are merely examples. For a diagram of a vehicle update system and a diagram of a vehicle architecture in another form, refer to a related standard or protocol. Details are not described herein.

The following embodiments are applicable to the vehicle update system shown in FIG. 1 and the vehicle architectures shown in FIG. 2 and FIG. 3, or are applicable to a vehicle update system and a vehicle architecture in another form. Details are not described below.

This application provides an update method, applied to the field of connected vehicle technologies, for example, OTA update of a connected vehicle. To describe the solutions of this application more clearly, the following first describes some knowledge related to OTA update.

Over the air (over the air, OTA) is a technology for downloading data through a wireless network, and is currently widely applied to update of devices such as vehicles, televisions, mobile phones, tablet computers, or set-top boxes. For example, for a vehicle, firmware and software data in each controller in the vehicle may be remotely updated by using OTA. A software manager may upload software to a cloud, and the vehicle may automatically download the software from the cloud or a user chooses to download the software from the cloud, to update local software, so as to implement function upgrade or function update of a local vehicle system. For example, an electronic control unit (electronic control unit, ECU) of the vehicle may be updated by using OTA, and vehicle performance may be updated by updating the ECU. The OTA technology is being applied more extensively because of the convenience of OTA update.

A unified diagnosis service (unified diagnosis service, UDS) is one of standard protocols in the automobile industry for diagnosing and locating an ECU trouble, for example, determining what instruction is sent to the ECU for reading a trouble code and what instruction is sent for reading a data stream. In a vivid manner, a set of instruments (generally called a master computer) is used to analyze information and data inside the ECU on the current vehicle. A language used by the set of instruments to communicate with the ECU is the UDS.

A diagnosis service 31 is a routine service, and an English full name is routine control service. A diagnostic instrument or master computer may start or stop a routine or obtain a routine execution result by using a related diagnosis command. A common application scenario of the diagnosis service 31 is erasing a memory, resetting defined data, or detecting a refresh condition during ECU refresh.

A diagnosis service 85 controls reporting or recovery of a diagnosis trouble code (diagnostic trouble code, DTC).

A diagnosis service 28 is mainly used for sending and receiving of a packet on a network, for example, control sending and receiving of an application packet, or control sending and receiving of a network management packet, to meet an application requirement in a specific scenario.

Generally, the diagnosis service 28 is mainly used in the following scenarios.
(1) The diagnosis service 28 is used in some special test scenarios, for example, only a network management packet and an application packet need to be received or sent.
(2) In most cases, the diagnosis service 28 is used in a process of flashing the ECU. To be specific, when service 28 functional addressing is performed in a pre-programming condition, sending and receiving of a bus application packet and a network management packet can be suppressed, to reduce network bus load and improve ECU download efficiency. In addition, after the ECU is flashed, the service 28 needs to be performed to enable sending and receiving of a corresponding control packet. In this process, the service 28 is generally used together with the service 85.

During conventional OTA update, the ECU uses a diagnosis protocol of the unified diagnosis service (unified diagnosis service, UDS) for OTA flashing. However, in a vehicle-mounted bus architecture, a processing priority of a UDS diagnosis packet is lower than a processing priority of an application packet on a controller area network (controller area network, CAN) bus. To prevent a frame loss during diagnosis packet flashing and ensure a success rate of OTA flashing, an OTA client (OTA Client) broadcasts the diagnosis service 28 (functional addressing or broadcasting in an entire network) in advance, to enable the ECU of the entire vehicle to keep communication silent.

The entire vehicle cannot provide a normal service function because bottom-layer service communication is interrupted. To improve user experience of the entire intelligent vehicle in an OTA flashing process, for example, when a non-battery/motor/controller domain ECU (for example, intelligent driving, intelligent cockpit, vehicle body domain, and chassis domain) is updated, a battery/motor/controller domain ECU, including a high-voltage power supply system, for example, a battery management system (battery management system, BMS), a thermal management system (thermal management system, TMS), and a vehicle control unit (vehicle control unit, VCU)/vehicle direct communication (vehicle direct communication, VDC), can work normally, and the vehicle can work normally at a high voltage. For another example, when a vehicle body domain is not updated, functions such as a vehicle door, a vehicle window, and a seat massager can work normally. For another example, when update is performed at a high voltage, an air conditioner can work, and an acoustic, lighting, and electricity function of a vehicle body domain is effective. To achieve the foregoing objectives, a special solution is required to ensure communication of an application packet on a corresponding ECU.

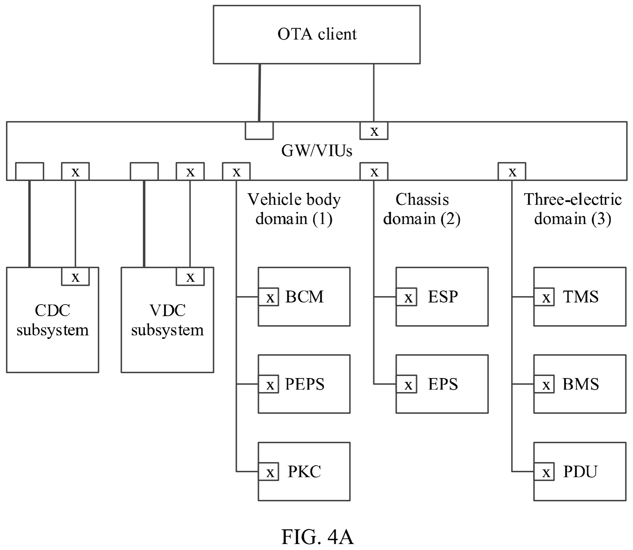

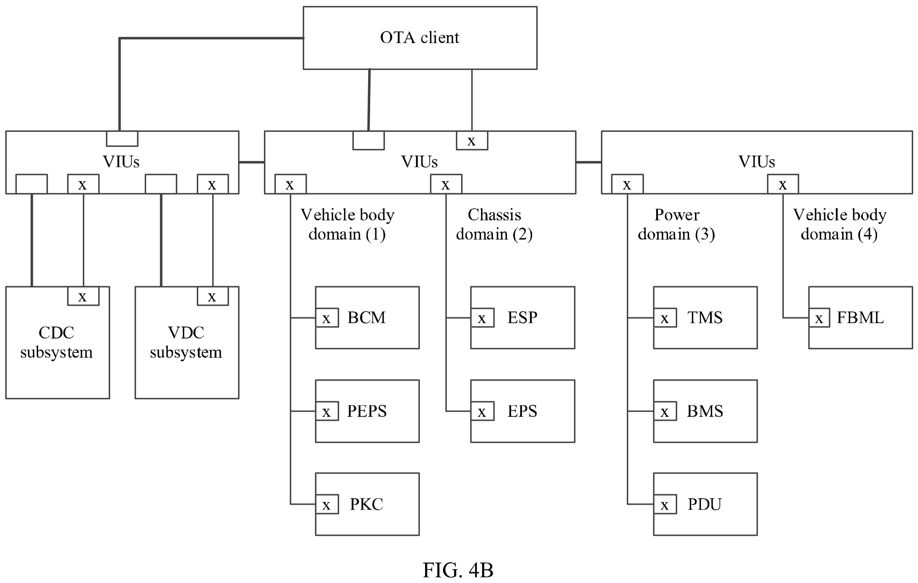

The following further describes the foregoing OTA flashing process with reference to FIG. 4A and FIG. 4B.

FIG. 4A is a diagram of a vehicle topology architecture according to an embodiment of this application.

As shown in FIG. 4A, the vehicle topology architecture includes a VIU/GW, and the VIU/GW is connected to one or more ECUs through different CAN buses. The VIU/GW is connected to a CDC subsystem through a CAN bus, and the VIU/GW is connected to a VDC subsystem through another CAN bus. The VIU/GW is connected to a vehicle body domain ECU through still another CAN bus, and the vehicle body domain ECU includes but is not limited to a body control module (body control module, BCM), a passive entry passive start system (passive entry passive start, PEPS), a public key cryptosystem (public key cryptosystem, PKC), and the like. The VIU/GW is connected to a chassis domain ECU through still another CAN, and the chassis domain ECU includes but is not limited to an electronic stability program (electronic stability program, ESP), an electronic power steering (electronic power steering, EPS) system, and the like. The VIU/GW is connected to the battery/motor/controller domain ECU through still another CAN, and the battery/motor/controller domain ECU includes but is not limited to a thermal management system (thermal management system, TMS), a battery management system (battery management system, BMS), and a high-voltage power distribution unit (power distribution unit, PDU).

In FIG. 4A, the OTA client (OTA Client) sends the diagnosis service 28 to the VIU/GW. After receiving the service 28, the VIU/GW disables an application packet routing and forwarding function, and forwards the service 28 to each ECU connected to the VIU/GW. After receiving the service 28, each ECU disables an application packet receiving and sending function, so that each ECU connected to the VIU/GW keeps communication silent, and makes way for flashing of a UDS diagnosis packet of each ECU.

FIG. 4B is a diagram of a vehicle topology architecture according to an embodiment of this application.

As shown in FIG. 4B, the vehicle topology architecture includes a plurality of VIUs/GWs, the plurality of VIUs/GWs are connected to one or more ECUs through different CAN buses, and the plurality of VIUs form a ring network. One VIU is connected to a CDC subsystem and a VDC subsystem through two CAN buses, and another VIU is connected to a vehicle body domain ECU and a chassis domain ECU through two CAN buses. The vehicle body domain ECU includes but is not limited to a BCM, a PEPS, a PKC, and the like. The chassis domain ECU includes but is not limited to an ESP, an EPS, and the like. Still another VIU is connected to a power domain ECU and a vehicle body domain ECU through two CAN buses. The power domain ECU includes but is not limited to a TMS, a BMS, a PDU, and the like.

In FIG. 4B, the OTA client (OTA Client) sends the diagnosis service 28 to the plurality of VIUs/GWs. After receiving the service 28, the plurality of VIUs/GWs disable application packet routing and forwarding functions, and forward the service 28 to each ECU connected to the VIUs/GWs. After receiving the service 28, each ECU disables an application packet receiving and sending function, so that each ECU connected to the plurality of VIUs/GWs keeps communication silent, and makes way for flashing of a UDS diagnosis packet of each ECU.

In FIG. 4A and FIG. 4B, because the service 28 of the VIU/GW supports only one processing mode (enabling or disabling of the application packet receiving and sending function), the VIUs/GWs are not divided into different VIU/GW groups or CAN groups to avoid conflicts between enabling and disabling of application packet receiving and sending. Currently, in a common update manner, the application packet receiving and sending function (functional addressing) on an entire network (the VGW/VIU) is first disabled. Then, for different VIU/GW groups or CAN groups, a plurality of OTA client processes are used to implement branch installation control for the ECU through point-to-point update (physical addressing). After the ECU is updated and reset (after the ECU is reset, the ECU may automatically enable an application packet communication function), the application packet communication function of the ECU is disabled again by sending the service 28 through physical addressing, to ensure that CAN bus communication is silent when another ECU on the CAN bus are updated.

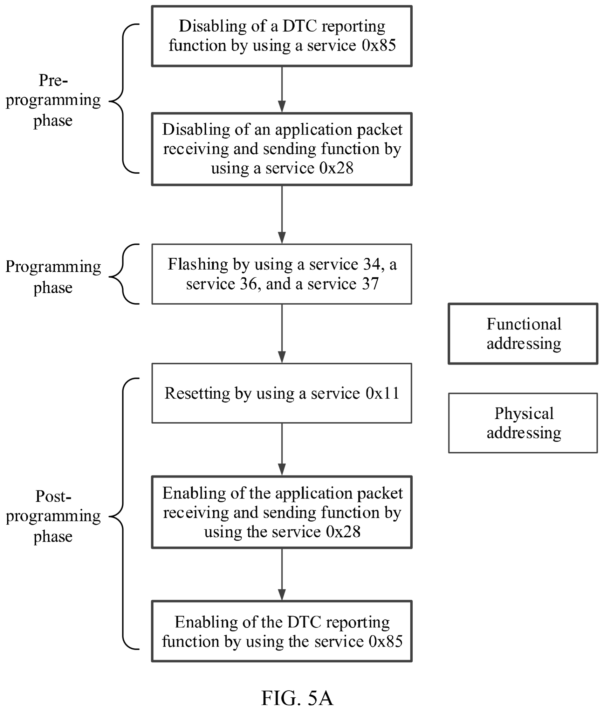

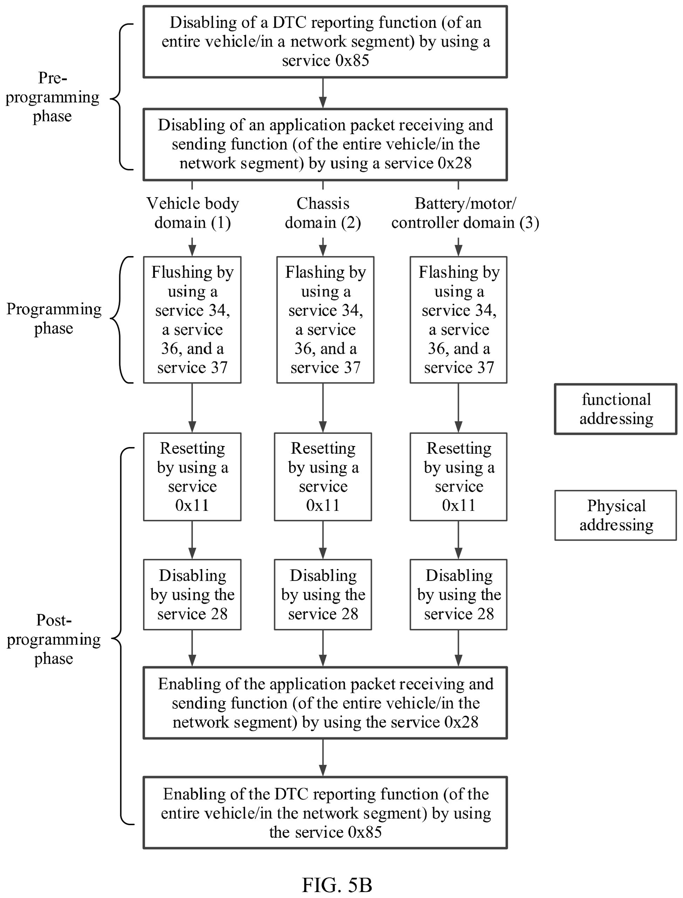

The following further describes ECU programming in the foregoing OTA flashing process with reference to FIG. 5A and FIG. 5B.

FIG. 5A is a diagram of an ECU programming procedure according to an embodiment of this application.

FIG. 5A shows a programming procedure of an ECU. In a pre-programming phase, a diagnosis trouble code (diagnostic trouble code, DTC) reporting function is disabled by using the diagnosis service 85, and then an application packet receiving and sending function is disabled by using the diagnosis service 28. In a programming phase, a diagnosis packet is flashed on the ECU by using a diagnosis service 34, a diagnosis service 36, and a diagnosis service 37 service, and the ECU may be any one of the ECUs in FIG. 4A and FIG. 4B. In a post-programming phase, the ECU is reset by using a diagnosis service 11, the application packet receiving and sending function is enabled by using the diagnosis service 28, and the DTC reporting function is enabled by using the diagnosis service 85.

FIG. 5B is a diagram of an ECU programming procedure according to an embodiment of this application.

FIG. 5B shows a process of parallel programming of ECUs on different CAN buses. In a pre-programming phase, a DTC reporting function of an entire vehicle/network segment is disabled by using the diagnosis service 85, and then an application packet receiving and sending function of the entire vehicle/network segment is disabled by using the diagnosis service 28. In a programming phase, parallel flashing of diagnosis packets on the ECUs on different CAN buses is performed by using a diagnosis service 34, a diagnosis service 36, and a diagnosis service 37 service. The ECUs on the different CAN buses may be ECUs on CAN buses corresponding to the vehicle body domain, the chassis domain, and the battery/motor/controller domain in FIG. 4A. In a post-programming phase, the ECUs on different CAN buses are reset by using a diagnosis service 11, the application packet receiving and sending function is enabled by using the diagnosis service 28, and the DTC reporting function is enabled by using the diagnosis service 85.

It can be learned from FIG. 4A and FIG. 4B that, currently, to ensure a flashing success rate during OTA update, application packet communication of the entire vehicle is disabled. Because bottom-layer service communication is interrupted, the ECU of the entire vehicle may fail to provide a normal service function during OTA update.

To resolve the technical problem that the ECU of the entire vehicle cannot provide the normal service function in the foregoing OTA update process, an embodiment of this application provides an update architecture of a vehicle system, and proposes a new update method based on the update architecture, so that a normal service function of another ECU on which OTA update is not performed can be ensured in a process of performing OTA update on some ECUs.

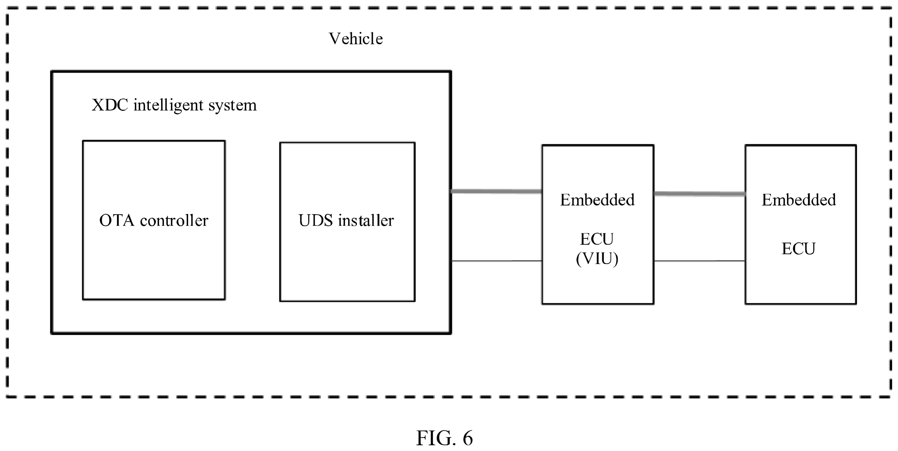

FIG. 6 is a diagram of a vehicle system update architecture according to an embodiment of this application.

As shown in FIG. 6, the vehicle system update architecture mainly includes an OTA controller (OTA controller) module, a UDS installer (UDS installer) module, a VIU/VGW, and an ECU. The OTA controller module and the UDS installer module may jointly form an X sensor data center (X sensor data center, XDC) intelligent system. The VIU/VGW is connected between the XDC intelligent system and each ECU of an entire vehicle. The OTA controller module is configured to control OTA update of the ECU of the entire vehicle. The UDS installer module is configured to perform diagnosis packet flashing on the ECU of the entire vehicle. The OTA controller module and the UDS installer module work together to ensure, in a process of performing OTA update on some ECUs, a normal service function of another ECU on which OTA update is not performed.

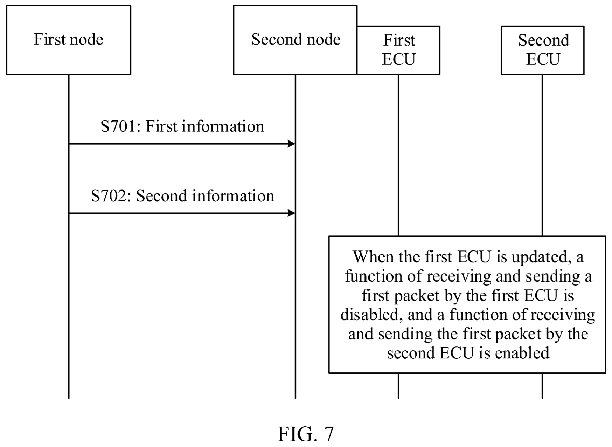

Based on the vehicle system update architecture shown in FIG. 6, embodiments of this application further provide a new update method. The following describes the update method with reference to FIG. 7.

FIG. 7 is a schematic flowchart of the update method according to an embodiment of this application. The update method is applied to the field of connected vehicle technologies, for example, OTA update of a connected vehicle. Specifically, the update method is applied to a vehicle. The vehicle includes a first node, a second node, a first electronic control unit (electronic control unit, ECU), and a second ECU. The first ECU is connected to the second node. The update method includes but is not limited to the following steps.

S701: The first node sends first information to the second node, and correspondingly, the second node receives the first information from the first node.

S702: The first node sends second information to the second node, and correspondingly, the second node receives the second information from the first node.

It may be understood that the first node in embodiments of this application is a device equipped with a processor/chip that may be configured to execute computer-executable instructions, or may be a processor/chip that may be configured to execute computer-executable instructions. This is not limited in embodiments of this application. Optionally, the first node may be a processor/chip in a connected vehicle, for example, may be specifically the OTA control (OTA controller) module in FIG. 6, or may be the UDS installer (UDS installer) module in FIG. 6, or may be the XDC intelligent system formed by both the OTA controller module and the UDS installer module in FIG. 6, and is configured to perform the update method in embodiments of this application, to ensure, in a process of performing OTA update on some ECUs, a normal service function of another ECU on which OTA update is not performed

It may be understood that the second node in embodiments of this application is a device equipped with a processor/chip that may be configured to execute computer-executable instructions, or may be a processor/chip that may be configured to execute computer-executable instructions. This is not limited in embodiments of this application. Optionally, the second node may be a processor/chip in a connected vehicle, for example, may be specifically the VIU/VGW in FIG. 6, and is configured to participate in performing the update method in embodiments of this application, to ensure, in the process of performing OTA update on some ECUs, the normal service function of the another ECU on which OTA update is not performed

It may be understood that the first ECU or the second ECU in embodiments of this application may be referred to as a "driving computer", a "vehicle-mounted computer", or the like, is a vehicle-specific microcomputer controller from a perspective of usage, and is also called a vehicle-specific single-chip microcomputer. Like a common single-chip microcomputer, the first ECU or the second ECU includes a central processing unit (central processing unit, CPU), a memory, an input/output interface, an analog-to-digital converter, large-scale integrated circuits such as a shaper and a drive, and the like. Optionally, the first ECU and the second ECU may be specifically the ECUs in FIG. 6, and are configured to participate in performing the update method in embodiments of this application, to ensure, in a process of performing OTA update on the first ECU, a normal service function of the second ECU on which OTA update is not performed

It may be understood that the vehicle in embodiments of this application may be replaced with a terminal device. The terminal device may be a terminal device that needs to download data through a wireless network to update local software, for example, an uncrewed aerial vehicle, an airborne vehicle, a ship, or a mobile robot. This is not specifically limited in embodiments of this application.

The first information indicates to disable a function of sending and receiving a first packet by the first ECU connected to the second node of the vehicle, and the second information is used to perform OTA update on the first ECU.

Specifically, the first node of the vehicle sends the first information and the second information, so that when OTA update is performed on the first ECU, the function of receiving and sending the first packet by the first ECU is disabled, and a function of receiving and sending the first packet by the second ECU of the vehicle is enabled.

Optionally, the first information may be specifically a UDS diagnosis service 28, and is used to disable the function of receiving and sending the first packet by the first ECU connected to the second node of the vehicle.

Optionally, that the first node sends the first information and the second information to the second node may be specifically: sending the first information and the second information to a specific node (the second node) in the vehicle in a sending manner, for example, multicast sending or point-to-point sending. This is not limited in embodiments of this application.

The first packet in embodiments of this application may be an application packet, and may be specifically an application packet for bottom-layer service communication in the vehicle, and is used to ensure that each ECU in the vehicle provides a normal service function.

In embodiments of this application, the function of receiving and sending the first packet by the first ECU may be understood as that the first packet is received and sent based on communication through an in-vehicle wired network connected to the first ECU. Correspondingly, disabling the function of receiving and sending the first packet by the first ECU may be understood as disabling a communication function of the in-vehicle wired network connected to the first ECU.

Similarly, the function of receiving and sending the first packet by the second ECU is similar to the foregoing function of receiving and sending the first packet by the first ECU, and a principle of enabling the function of receiving and sending the first packet by the second ECU is similar to a principle of disabling the function of receiving and sending the first packet by the first ECU. Details are not described herein again.

Currently, to ensure a flashing success rate during OTA update, application packet communication of the entire vehicle is disabled. Because bottom-layer service communication is interrupted, the ECU of the entire vehicle may fail to provide a normal service function during OTA update.

Compared with that in a currently commonly used OTA update method in which application packet communication of the entire vehicle is disabled to ensure the flashing success rate, in the update method in embodiments of this application, the first information and the second information can be sent to the specific node (the second node) in the vehicle in the sending manner, for example, multicast sending or point-to-point sending, to indicate to disable a function of sending and receiving the first packet by an ECU connected to the second node, so as to perform OTA update on the ECU connected to the second node. In addition, an ECU connected to a node (a node other than the second node) that does not receive the first information and the second information can normally receive and send the first packet, and provide a normal service function.

According to embodiments of this application, in a process of performing OTA update on some ECUs, a normal service function of another ECU on which OTA update is not performed can be ensured.

In a possible embodiment, an update packet corresponding to the second information that is used to perform OTA update on the first ECU may be a diagnosis packet, may be specifically a diagnosis packet in a unified diagnostic service (unified diagnosis service, UDS) standard protocol, and is used to perform diagnostic packet flashing on the ECU to implement OTA update.

It may be understood that, in the vehicle-mounted bus architecture shown in but not limited to FIG. 4A and FIG. 4B, a processing priority of the update packet (the diagnosis packet) corresponding to OTA update is lower than a processing priority of the application packet (the first packet) for bottom-layer service communication in the vehicle. Therefore, to avoid a frame loss of flashing during OTA update on the first ECU, the first node sends the first information to indicate to disable the function of receiving and sending the first packet by the first ECU connected to the second node, to make way for diagnosis packet flashing during OTA update. This can ensure a success rate of diagnosis packet flashing, and implement OTA update of the first ECU.

In a possible embodiment, the first node of the vehicle sends the first information and the second information, so that when OTA update is performed on the first ECU, the function of receiving and sending the first packet by the first ECU is disabled, and the function of receiving and sending the first packet by the second ECU of the vehicle is enabled. An application scenario and an implementation are specifically as follows.

### Case 1

The first ECU is an ECU connected to the second node, and the second ECU is an ECU connected to the third node.

It may be understood that the third node in embodiments of this application is similar to the second node. The third node is a device equipped with a processor/chip that may be configured to execute computer-executable instructions, or may be a processor/chip that may be configured to execute computer-executable instructions. This is not limited in embodiments of this application. Optionally, the third node may be a processor/chip in a connected vehicle, for example, may be specifically the VIU/VGW in FIG. 6, and is configured to participate in performing the update method in embodiments of this application, to ensure, in the process of performing OTA update on some ECUs, the normal service function of the another ECU on which OTA update is not performed

The third node and the second node may be understood as nodes such as vehicle integration units (vehicle integration units, VIUs) or virtual private gateways (virtual private gateways, VGWs) in the vehicle, that are configured to forward information and implement a network interconnection function, and are different nodes (VIUs/VGWs) in the vehicle, and the third node and the second node (VIUs/VGWs) form a ring network. The second node and the third node are separately connected to one or more ECUs through different CAN buses. These ECUs receive and send packets by using a packet routing and forwarding function of the second node or the third node, to implement bottom-layer service communication in the vehicle, so as to provide a corresponding service function.

In a scenario in which there are a plurality of nodes (VIUs/VGWs) in the vehicle, a plurality of ECUs in the vehicle can be grouped based on different VIUs/VGWs. A plurality of ECUs connected to a same VIU/VGW are considered as ECUs in one group, and a plurality of ECUs connected to different VIUs/VGWs are considered as ECUs in different groups.

The first information and the second information are sent to a specific VIU/VGW (the second node) in the vehicle, to indicate to disable functions of receiving and sending the first packet by ECUs (the first ECU) that are in a same group and that are connected to the VIU/VGW (the second node), to disable communication packet receiving and sending functions of some VIUs/VGWs (the second node) in the vehicle, so as to perform OTA update on the ECUs (the first ECU) that are in the same group and that are connected to the VIU/VGW (the second node). In addition, it is ensured that a communication packet of an ECU (the second ECU) connected to another VIU/VGW (the third node) that does not receive the first information and the second information is normally received and sent, to provide a normal service function.

For example, FIG. 4B is used as an example to further describe the second node, the third node, the first ECU, and the second ECU.

The second node may be a VIU to which a vehicle body domain ECU and a chassis domain ECU are connected separately through two CAN buses. The vehicle body domain ECU includes but is not limited to a BCM, a PEPS, a PKC, and the like. The chassis domain ECU includes but is not limited to an ESP, an EPS, and the like.

It may be understood that the first ECU connected to the second node includes the vehicle body domain ECU and the chassis domain ECU that are connected to the second node through the two CAN buses. These ECUs receive and send packets by using the packet routing and forwarding function of the second node, to implement bottom-layer service communication in the vehicle, so as to provide a corresponding service function.

The third node may be a VIU to which a power domain ECU and a vehicle body domain ECU are connected separately through two CAN buses. The power domain ECU includes but is not limited to a TMS, a BMS, a PDU, and the like.

It may be understood that the second ECU connected to the third node includes the power domain ECU and the vehicle body domain ECU that are connected to the third node through the two CAN buses. These ECUs receive and send packets by using the packet routing and forwarding function of the third node, to implement bottom-layer service communication in the vehicle, so as to provide a corresponding service function.

In FIG. 4B, the first information and the second information are sent to a specific VIU (the second node) in the vehicle, to indicate to disable functions of receiving and sending the first packet by ECUs (the first ECU) that are in a same group and that are connected to the VIU (the second node), and the group of ECUs include the body domain ECU and the chassis domain ECU that are separately connected to the second node through the two CAN buses. In this way, communication packet receiving and sending functions of some VIUs (the second node) in the vehicle are disabled, to perform OTA update on the ECUs (the first ECU) that are in the same group and that are connected to the VIU (the second node). In addition, it is ensured that a communication packet of an ECU (the second ECU) connected to another VIU (the third node) that does not receive the first information and the second information is normally received and sent, to provide a normal service function. The group of ECUs include the power domain ECU and the vehicle body domain ECU that are separately connected to the third node through two CAN buses.

According to embodiments of this application, ECUs are grouped based on ring network VIUs (for a scenario in which there are a plurality of VIUs), so that communication packet receiving and sending functions of some VIUs can be disabled, to ensure that a service function of an ECU of a non-flashing VIU is normal.

Optionally, the first information further indicates to disable a function of receiving and sending the first packet by the second node.

In the scenario in which there are a plurality of nodes (VIUs/VGWs) in the vehicle, the first information is sent to a specific node (the second node) in the vehicle, to indicate to disable the function of sending and receiving the first packet by the ECU connected to the second node, and indicate to disable a function of routing and forwarding the first packet by the second node, to disable communication packet receiving and sending functions of some nodes (the second node) in the vehicle, so as to perform OTA update on an ECU connected to the node.

Optionally, the first node further sends indication information, to indicate to enable a function of receiving and sending the first packet by the third node.

Optionally, the indication information further indicates to enable a function of receiving and sending the first packet by an ECU connected to the third node.

Optionally, the indication information and the first information may be carried in different packets, or the indication information and the first information may be carried in different fields of a same packet. This is not limited in embodiments of this application.

Optionally, the function of receiving and sending the first packet by the third node is enabled by default. It may be understood that, in this case, the first node can enable the function of receiving and sending the first packet by the third node, without sending the indication information.

Optionally, a function of receiving and sending the first packet by the ECU connected to the third node is enabled by default. It may be understood that, in this case, the first node can enable the function of receiving and sending the first packet by the third node, without sending the indication information.

### Case 2

The first ECU is an ECU connected to a first in-vehicle wired network, and the second ECU is an ECU connected to a second in-vehicle wired network.

The first in-vehicle wired network and the second in-vehicle wired network are two different in-vehicle wired networks connected to the second node.

The second node may be understood as a node, for example, a vehicle integration unit (vehicle integration unit, VIU) or a virtual private gateway (virtual private gateway, VGW) in the vehicle, that is configured to forward information and implement a network interconnection function. The second node is connected to a plurality of in-vehicle wired networks, and each in-vehicle wired network is connected to one or more ECUs. These ECUs receive and send, through the in-vehicle wired networks connected to the ECUs, packets by using a packet routing and forwarding function of the second node, to implement bottom-layer service communication in the vehicle, so as to provide a corresponding service function.

For a scenario in which a plurality of in-vehicle wired networks are connected to the second node in the vehicle, the plurality of ECUs in the vehicle may be grouped based on different in-vehicle wired networks. A plurality of ECUs connected to a same in-vehicle wired network are considered as ECUs in one group, and a plurality of ECUs connected to different in-vehicle wired networks are considered as ECUs in different groups.

The first information and the second information are sent to a specific node (the second node) in the vehicle, to indicate to disable functions of sending and receiving the first packet by ECUs that are in a same group and that are connected to one or more in-vehicle wired networks (the first in-vehicle wired network) connected to the second node, to disable communication packet receiving and sending functions of some in-vehicle wired networks (the first in-vehicle wired network) connected to the second node in the vehicle, so as to perform OTA update on ECUs that are in a same group and that are connected to the in-vehicle wired networks (the first in-vehicle wired network). In addition, it is ensured that a communication packet of an ECU connected to another in-vehicle wired network (the second in-vehicle wired network) connected to the second node in the vehicle is normally received and sent, to provide a normal service function.

For example, FIG. 4A is used as an example to further describe the second node, the first in-vehicle wired network, the second in-vehicle wired network, the first ECU, and the second ECU.

The second node may be a VIU/GW to which one or more ECUs are connected through different CAN buses. Specifically, the second node is connected a vehicle body domain ECU through a CAN bus (the first in-vehicle wired network). The vehicle body domain ECU includes but is not limited to a BCM, a PEPS, a PKC, and the like.

It may be understood that the first ECU connected to the first in-vehicle wired network that is connected to the second node is a vehicle body domain ECU connected to the second node through a CAN bus. Such an ECU receives and sends a packet by using a packet routing and forwarding function of the first in-vehicle wired network connected to the second node, to implement bottom-layer service communication in the vehicle, so as to provide a corresponding service function.

The second node may be a VIU/GW to which one or more ECUs are connected through different CAN buses. Specifically, the second node is connected to a chassis domain ECU through another CAN bus (the second in-vehicle wired network). The chassis domain ECU includes but is not limited to an ESP, an EPS, and the like.

It may be understood that the second ECU connected to the second in-vehicle wired network that is connected to the second node is a chassis domain ECU connected to the second node through a CAN bus. Such an ECU receives and sends a packet by using a packet routing and forwarding function of the second in-vehicle wired network connected to the second node, to implement bottom-layer service communication in the vehicle, so as to provide a corresponding service function.

In FIG. 4A, the first information and the second information are sent to a specific node (the second node) in the vehicle, to indicate to disable functions of sending and receiving the first packet by ECUs (the first ECU) that are in a same group and that are connected to one or more in-vehicle wired networks (the first in-vehicle wired network) connected to the second node, and the group of ECUs include the vehicle body domain ECU connected to the second node through the CAN bus. In this way, communication packet receiving and sending functions of some in-vehicle wired networks (the first in-vehicle wired network) connected to the second node in the vehicle are disabled, to perform OTA update on ECUs (the first ECU) that are in a same group and that are connected to the in-vehicle wired networks (the first in-vehicle wired network). In addition, it is ensured that a communication packet of an ECU (the second ECU) connected to another in-vehicle wired network (the second in-vehicle wired network) that is connected to the second node in the vehicle is normally received and sent, to provide a normal service function. The group of ECUs include the chassis domain ECU connected to the second node through the CAN bus.

According to embodiments of this application, ECUs are grouped based on CAN buses (for a scenario in which there are a plurality of CAN buses), so that communication packet receiving and sending functions of some CAN buses can be disabled, to ensure that a service function of an ECU of a non-flashing network segment is normal.

Optionally, the first in-vehicle wired network and the second in-vehicle wired network correspond to a same wired network standard,
for example, may be both controller area networks (controller area networks, CANs), or may be both Ethernet. This is not limited in embodiments of this application.

It may be understood that, when the first in-vehicle wired network is a first CAN bus, and the second in-vehicle wired network is a second CAN bus, the first information and the second information may be sent to a specific node (the second node) in the vehicle, to indicate to disable functions of receiving and sending the first packet by ECUs that are in a same group and that are connected to the first CAN bus connected to the second node, to disable communication packet receiving and sending functions of some CAN buses (the first CAN bus) connected to the second node in the vehicle, so as to perform OTA update on ECUs that are in a same group and that are connected to the CAN buses (the first CAN bus). In addition, it is ensured that a communication packet of an ECU connected to another CAN bus (the second CAN bus) that is connected to the second node in the vehicle is normally received and sent, to provide a normal service function.

It may be understood that the communication connection may be understood as a wireless connection or a wired connection for information exchange. This is not limited in embodiments of this application. The wireless connection may be understood as that the VIU communicates with another unit in the vehicle without using a bus. For example, Bluetooth communication or Wi-Fi communication may be used. The wired connection may be understood as that the VIU communicates with another unit in the vehicle based on a bus. For example, a controller area network (controller area network, CAN) bus or local interconnect network (local interconnect network, LIN) bus Ethernet (ethernet) communication technology and a new wired transmission manner in the future may be used.

Optionally, the first node further sends third information.

The third information indicates to disable a function of receiving and sending, by the second node, a first packet corresponding to the first in-vehicle wired network.

Optionally, the third information may be specifically a UDS diagnosis service 31, and is used to disable the function of receiving and sending, by the second node, the first packet corresponding to the first in-vehicle wired network of the vehicle.

In a scenario in which a plurality of in-vehicle wired networks are connected to the second node in the vehicle, ECUs connected to some in-vehicle wired networks (the first in-vehicle wired network) that are connected to the second node need to disable functions of receiving and sending the first packet, to perform OTA update, and an ECU connected to another in-vehicle wired network (the second in-vehicle wired network) that is connected to the second node needs to enable a function of receiving and sending the first packet, to provide a normal service function. Therefore, a function of routing and forwarding the first packet by the second node cannot be completely disabled.

According to embodiments of this application, the third information may be sent to a specific node (the second node) in the vehicle in a sending manner, for example, multicast sending or point-to-point sending, to indicate to disable a function of routing and forwarding, by the second node, the first packet corresponding to the first in-vehicle wired network, to disable communication packet receiving and sending functions of some in-vehicle wired networks (the first in-vehicle wired network) connected to the second node, so as to perform OTA update on ECUs connected to the in-vehicle wired networks (the first in-vehicle wired network).

Optionally, the third information further indicates to enable a function of receiving and sending, by the second node, a first packet corresponding to the second in-vehicle wired network.

In a scenario in which a plurality of in-vehicle wired networks are connected to the second node in the vehicle, ECUs connected to some in-vehicle wired networks (the first in-vehicle wired network) that are connected to the second node need to disable functions of receiving and sending the first packet, to perform OTA update, and an ECU connected to another in-vehicle wired network (the second in-vehicle wired network) that is connected to the second node needs to enable a function of receiving and sending the first packet, to provide a normal service function. Therefore, a function of routing and forwarding the first packet by the second node cannot be completely disabled.

According to embodiments of this application, the third information may be sent to a specific node (the second node) in the vehicle in a sending manner, for example, multicast sending or point-to-point sending, to indicate to enable a function of routing and forwarding, by the second node, the first packet corresponding to the second vehicle wired network, to enable communication packets of some vehicle wired networks (the second vehicle wired network) connected to the second node, so as to ensure that an ECU connected to the second in-vehicle wired network can provide a normal service function when OTA update is performed on an ECU connected to the first in-vehicle wired network.

Optionally, the function of receiving and sending, by the second node, the first packet corresponding to the second in-vehicle wired network is enabled by default. It may be understood that, in this case, the first node can enable the function of receiving and sending, by the second node, the first packet corresponding to the second in-vehicle wired network, without an indication of sending the third information.

Optionally, a function of receiving and sending the first packet by the ECU connected to the second in-vehicle wired network is enabled by default. It may be understood that, in this case, the first node can enable the function of receiving and sending the first packet by the ECU connected to the second in-vehicle wired network, without an indication of sending the third information.

Optionally, the third information and the first information may be carried in different packets, or the third information and the first information may be carried in different fields of a same packet. This is not limited in embodiments of this application.

It should be understood that, in the application scenarios and implementations shown in Case 1 and Case 2, only a possible example in which the ECUs are grouped based on the VIUs or the CAN buses is used for description of disabling functions of sending and receiving the first packet some ECUs and enabling of functions of sending and receiving the first packet by some ECUs, and should not constitute a limitation on embodiments of this application. A possible embodiment that is obtained based on a supplement or an appropriate variation of the foregoing ECU grouping manner and that is used for disabling the functions of sending and receiving the first packet by the ECUs and enabling of the functions of sending and receiving the first packet by the ECUs falls within the protection scope of embodiments of this application.

In a possible embodiment, the first information includes at least a first field and a second field.

The first field corresponds to the second node, and indicates whether a function of receiving and sending an application packet by the ECU connected to the second node is disabled. The second field corresponds to the third node, and indicates whether a function of receiving and sending an application packet by the ECU connected to the third node is disabled.

According to embodiments of this application, in a process of performing OTA update on some ECUs, a normal service function of another ECU on which OTA update is not performed can be ensured.

Optionally, the first information includes a third field corresponding to a node.

When the third field is a valid field, for example, the third field corresponds to addresses of one or more nodes, a node corresponding to the address may disable a function of receiving and sending an application packet, and another node whose address does not correspond to the third field is not affected, and may receive and send an application packet, to provide a normal service function.

For example, the first information may be specifically a UDS diagnosis service 28. Based on a design of a frame structure of the service 28, the function of receiving and sending the first packet by the first ECU connected to the second node of the vehicle may be disabled based on a first field and a second field (optionally, a third field may be further included) in the frame structure of the service 28.

In a possible embodiment, the first node further sends fourth information.

The fourth information indicates to disable functions of sending and receiving the first packet by all or some ECUs in the vehicle.

According to embodiments of this application, the entire vehicle may be silent, to perform OTA update on the entire vehicle, or some ECUs may be silent, to perform OTA update on the silent ECUs, so as to ensure, in a process of performing OTA update on some ECUs, a normal service function of another ECU on which OTA update is not performed.

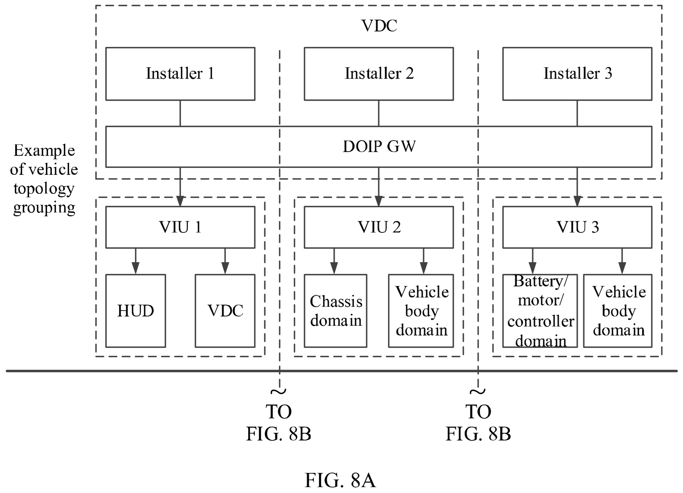

With reference to FIG. 8A to FIG. 9C, the following describes an OTA flashing procedure in the process of the update method shown in FIG. 7.

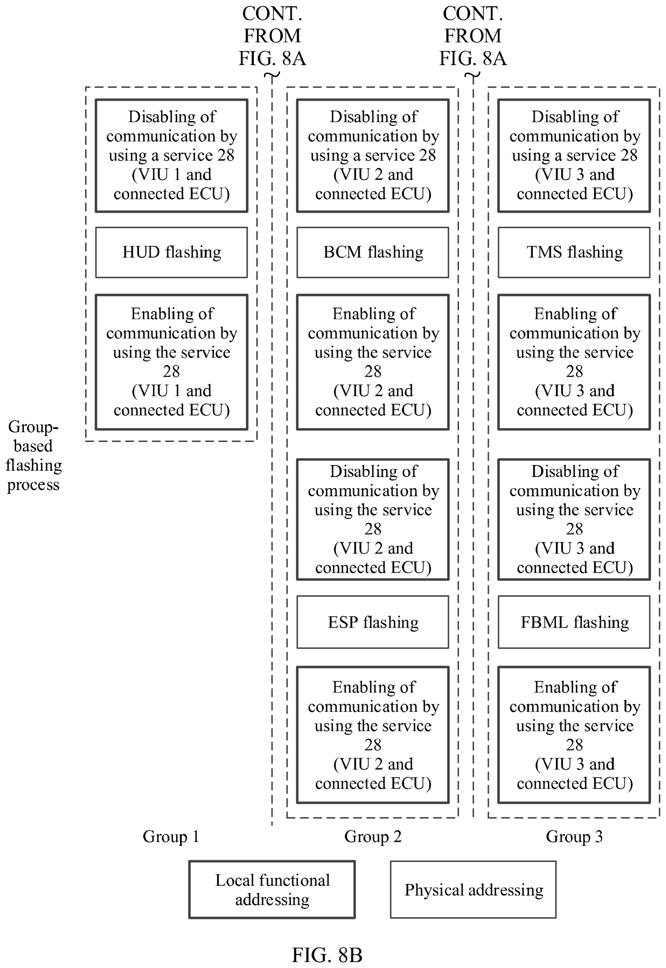

FIG. 8A and FIG. 8B are a diagram of an OTA flashing procedure according to an embodiment of this application.

FIG. 8A and FIG. 8B show a process, of parallel flashing of ECUs connected to VIUs, in a scenario in which there are a plurality of VIUs. In the scenario in which there are a plurality of VIUs, the ECUs are grouped based on ring network VIUs, to disable communication packet receiving and sending functions of some VIUs, so as to ensure that a service function of an ECU of a non-flashing VIU is normal.

Specifically, descriptions are provided with reference to the vehicle topology architecture shown in FIG. 4B. It is assumed that only a communication packet receiving and sending function of a specified VIU in the vehicle topology architecture is disabled, and the specified VIU is a VIU connected with a vehicle body domain (1) and a chassis domain (2). Completing OTA flashing of the VIU and an ECU connected to the VIU includes but is not limited to the following specific steps.

Step 1: During OTA update, an OTA UDS installer (namely, the first node in FIG. 7) sends the service 28 by using a group-based multicast function (different functional addressing addresses are allocated to different VIUs), and sends the UDS service 28 to ECUs in different groups.

Step 2: The OTA UDS installer (namely, the first node in FIG. 7) broadcasts diagnosis packets to different VIUs in groups, for example, vehicle broadcast-0xE400 (indicating that diagnosis packets are sent to all VIUs in the vehicle), VIU1-0xE440 (indicating that a diagnosis packet is sent to only a VIU 1), VIU2-0xE441 (indicating that a diagnosis packet is sent to only a VIU 2), and VIUn-0xE44n (indicating that a diagnosis packet is sent to only a VIU n). This is not limited in embodiments of this application.

Step 3: After receiving the service 28 through grouping functional addressing, the VIU disables or enables an application packet receiving and sending function of the VIU based on an indication of the service 28, and forwards the received diagnosis packet to the connected ECU.

Step 4: After receiving the service 28, the connected ECU disables or enables an application packet receiving and sending function based on an indication of the service 28, and performs OTA flashing based on the received diagnosis packet.

According to embodiments of this application, in a parallel OTA update process, only an application packet receiving and sending function of a VIU and an application packet receiving and sending function of an ECU connected to the VIU may be disabled through grouping functional addressing, so that the VIU and the connected ECU to the VIU does not affect normal service functions of another VIU and a connected ECU in the update process. This can improve efficiency of parallel OTA update, and reduce impact of OTA update on a vehicle function.

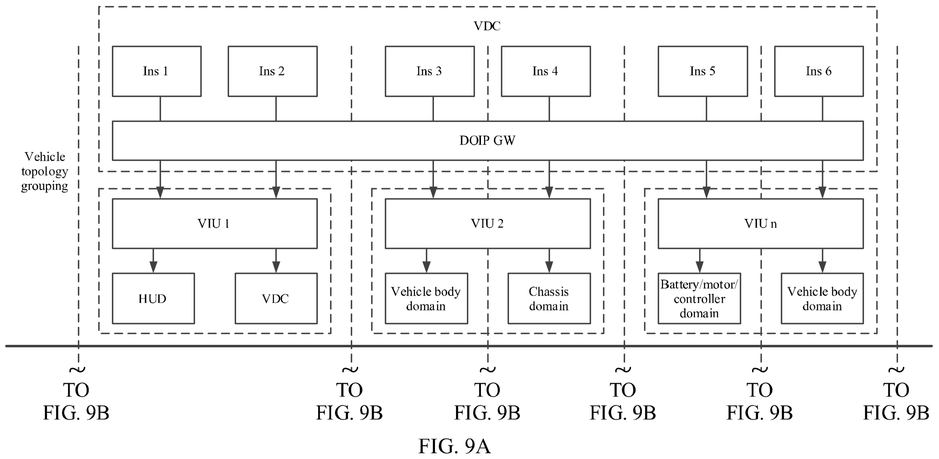

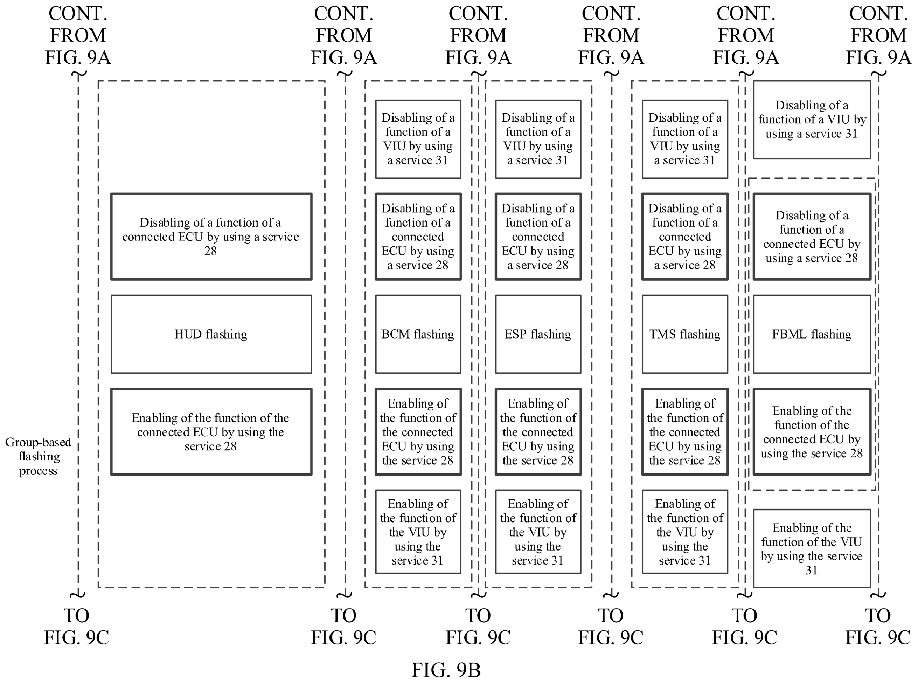

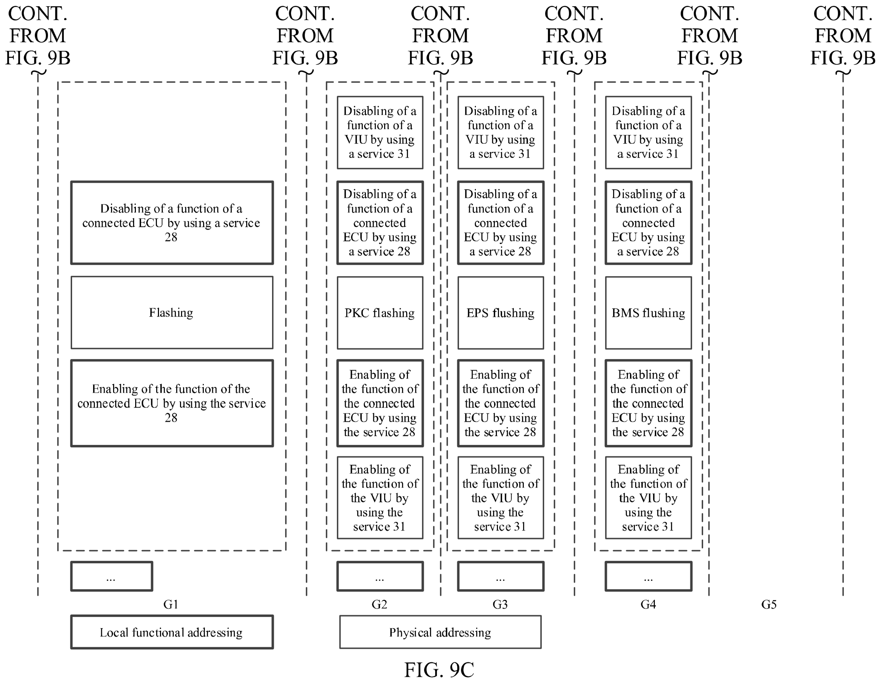

FIG. 9A to FIG. 9C are a diagram of an OTA flashing procedure according to an embodiment of this application.

FIG. 9A to FIG. 9C show a process, of parallel flashing of ECUs connected to CAN buses, in a scenario in which there are a plurality of CAN buses. In the scenario in which there are a plurality of CAN buses, the ECUs are grouped based on the CAN buses, to disable communication packet receiving and sending functions of some CAN buses, so as to ensure that a service function of an ECU in a non-flashing network segment is normal.

Specifically, descriptions are provided with reference to the vehicle topology architecture shown in FIG. 4B. It is assumed that only a communication packet receiving and sending function corresponding to a specified CAN bus connected to a specified VIU in the vehicle topology architecture is disabled, the specified VIU is a VIU connected with a vehicle body domain (1) and a chassis domain (2), and the specified CAN bus connected to the specified VIU is a CAN bus connected to a vehicle body domain ECU (1). Completing OTA flashing of the specified CAN bus connected to the VIU and the ECU connected to the CAN bus includes but is not limited to the following specific steps.

Step 1: During OTA update, an OTA UDS installer (namely, the first node in FIG. 7) sends, to a specified VIU through physical addressing, a notification of partially disabling application packet receiving and sending, for example, a diagnosis service 31. After receiving the service 31, the specified VIU partially disables an application packet receiving and sending function as required, and disables forwarding of an application packet corresponding to the vehicle body domain or the chassis domain.

Step 2: The OTA UDS installer (namely, the first node in FIG. 7) sends the service 28 by using a group-based multicast function (different functional addressing addresses are allocated to different VIUs), and sends the UDS service 28 to ECUs in different groups.

Step 3: The OTA UDS installer (namely, the first node in FIG. 7) broadcasts diagnosis packets to different VIUs in groups, for example, vehicle broadcast-0xE400 (indicating that diagnosis packets are sent to all VIUs in the vehicle), VIU1-0xE440/0xE441 (indicating that a diagnosis packet is sent to only a VIU 1), VIU2-0xE442/0xE443 (indicating that a diagnosis packet is sent to only a VIU 2), and VIUn-0xE44n (indicating that a diagnosis packet is sent to only a VIU n). This is not limited in embodiments of this application.

Step 4: After receiving the service 28 through grouping functional addressing, the VIU disables or enables, based on an indication of the service 28, the application packet receiving and sending function of the CAN bus corresponding to the VIU, and forwards the received diagnosis packet to the ECU connected to the corresponding CAN bus. For example, 0Xe400 indicates that the diagnosis packets are forwarded to all connected ECUs. 0xE440 indicates that the VIU 1 forwards the diagnosis packet to a CAN bus on which a HUD is located. 0xE442 indicates that the VIU 2 forwards the diagnosis packet to the connected vehicle body domain ECU. 0xE443 indicates that the VIU 2 forwards the diagnosis packet to a connected chassis domain ECU. 0xE444 indicates that the VIU n forwards the diagnosis packet to a connected power domain ECU. 0xE445 indicates that the VIU n forwards the diagnosis packet to the connected vehicle body domain ECU. This is not limited in embodiments of this application.

Step 5: After receiving the service 28, the connected ECU disables or enables an application packet receiving and sending function based on an indication of the service 28, and performs OTA flashing based on the received diagnosis packet.

According to embodiments of this application, in a parallel OTA update process, only an application packet receiving and sending function of an ECU connected to a CAN bus of a VIU may be disabled through grouping functional addressing, and the VIU is indicated, by using a diagnosis packet, to disable an application packet communication forwarding function of the CAN bus and an application packet receiving and sending function of the VIU on the CAN bus, so that the ECU connected to the CAN bus does not affect functions of another VIU and a connected ECU in the OTA update process. This can improve efficiency of parallel OTA update, and reduce impact of OTA update on a vehicle function.

The foregoing describes the methods in embodiments of this application in detail. The following provides an apparatus for implementing any method in embodiments of this application, for example, provides an apparatus including units (or means) configured to implement steps performed by a device in any one of the foregoing methods.

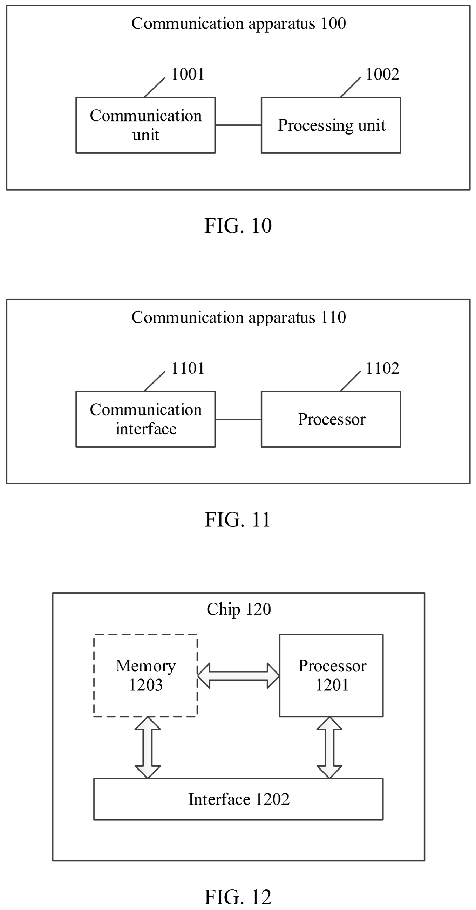

FIG. 10 is a diagram of a structure of a communication apparatus according to an embodiment of this application.

As shown in FIG. 10, the communication apparatus 100 may include a communication unit 1001 and a processing unit 1002. The communication unit 1001 and the processing unit 1002 may be software, hardware, or a combination of the software and the hardware.

The communication unit 1001 may implement a sending function and/or a receiving function, and the communication unit 1001 may alternatively be described as a transceiver unit. Alternatively, the communication unit 1001 may be a unit integrating an obtaining unit and a sending unit. The obtaining unit is configured to implement the receiving function, and the sending unit is configured to implement the sending function. Optionally, the communication unit 1001 may be configured to receive information sent by another apparatus, and may be further configured to send information to another apparatus.

In a possible design, the communication apparatus 100 may correspond to the first node in the method embodiment shown in FIG. 7. For example, the communication apparatus 100 may be the first node, or may be a chip in the first node. The communication apparatus 100 may include units configured to perform the operations performed by the first node in the method embodiment shown in FIG. 7. In addition, the units in the communication apparatus 100 are separately configured to implement the operations performed by the first node in the method embodiment shown in FIG. 7. The units are described as follows.

The communication unit 1001 is configured to send first information, where the first information indicates to disable a function of receiving and sending a first packet by a first ECU.

The communication unit 1001 is further configured to send second information, where the second information is used to perform over the air OTA update on the first ECU.

When OTA update is performed on the first ECU, the function of receiving and sending the first packet by the first ECU is disabled, a function of receiving and sending the first packet by a second ECU is enabled, and the second ECU is different from the first ECU.

In a possible implementation, the apparatus further includes:
the processing unit 1002, configured to generate the first information and/or the second information.

In a possible implementation, a processing priority of an update packet corresponding to OTA update is lower than a processing priority of the first packet.

In a possible implementation, a third node is different from a second node, and the second ECU is an ECU connected to the third node.

In a possible implementation, the first information further indicates to disable a function of receiving and sending the first packet by the second node.

In a possible implementation, the first ECU is an ECU connected to a first in-vehicle wired network, the second ECU is an ECU connected to a second in-vehicle wired network, and the first in-vehicle wired network and the second in-vehicle wired network are two different in-vehicle wired networks connected to the second node.

In a possible implementation, the first in-vehicle wired network and the second in-vehicle wired network correspond to a same wired network standard, for example, both are controller area networks CANs or both are Ethernet.

In a possible implementation, the communication unit 1001 is further configured to send third information, where the third information indicates to disable a function of receiving and sending, by the second node, a first packet corresponding to the first in-vehicle wired network.

In a possible implementation, the third information further indicates to enable a function of receiving and sending, by the second node, a first packet corresponding to the second in-vehicle wired network.

In a possible implementation, the first information includes at least a first field and a second field, the first field indicates whether a function of receiving and sending the first packet by an ECU connected to the second node is disabled, and the second field indicates whether a function of receiving and sending the first packet by an ECU connected to the third node is disabled.

In a possible implementation, the communication unit 1001 is further configured to send fourth information, where the fourth information indicates to disable functions of sending and receiving the first packet by all or some ECUs in a vehicle.

For the technical effect brought by this design and any possible implementation, refer to the descriptions of the technical effect corresponding to FIG. 7 and the corresponding implementations.

In another possible design of the communication apparatus 100 shown in FIG. 10, the communication apparatus 100 may correspond to the second node in the method embodiment shown in FIG. 7. For example, the communication apparatus 100 may be the second node, or may be a chip in the second node. The communication apparatus 100 may include units configured to perform the operations performed by the second node in the method embodiment shown in FIG. 7. In addition, the units in the communication apparatus 100 are separately configured to implement the operations performed by the second node in the method embodiment shown in FIG. 7. The units are described as follows.

The communication unit 1001 is configured to receive first information from a first node, where the first information indicates to disable a function of receiving and sending a first packet by a first ECU.

The communication unit 1001 is further configured to receive second information from the first node, where the second information is used to perform over the air OTA update on the first ECU.

When OTA update is performed on the first ECU, the function of receiving and sending the first packet by the first ECU is disabled, a function of receiving and sending the first packet by a second ECU is enabled, and the second ECU is different from the first ECU.

In a possible implementation, the apparatus further includes:
the processing unit 1002, configured to determine to forward the first information and/or the second information to the first ECU.

In a possible implementation, a processing priority of an update packet corresponding to OTA update is lower than a processing priority of the first packet.

In a possible implementation, a third node is different from the communication apparatus, and the second ECU is an ECU connected to the third node.

In a possible implementation, the first information further indicates to disable a function of receiving and sending the first packet by the communication apparatus.

In a possible implementation, the first ECU is an ECU connected to a first in-vehicle wired network, the second ECU is an ECU connected to a second in-vehicle wired network, and the first in-vehicle wired network and the second in-vehicle wired network are two different in-vehicle wired networks connected to the communication apparatus.

In a possible implementation, the first in-vehicle wired network and the second in-vehicle wired network correspond to a same wired network standard, for example, both are controller area networks CANs or both are Ethernet.

In a possible implementation, the communication unit 1001 is further configured to receive third information from the first node, where the third information indicates to disable a function of receiving and sending, by the communication apparatus, a first packet corresponding to the first in-vehicle wired network.

In a possible implementation, the third information further indicates to enable a function of receiving and sending, by the communication apparatus, a first packet corresponding to the second in-vehicle wired network.

In a possible implementation, the first information includes at least a first field and a second field, the first field indicates whether a function of receiving and sending the first packet by an ECU connected to the communication apparatus is disabled, and the second field indicates whether a function of receiving and sending the first packet by an ECU connected to the third node is disabled.

In a possible implementation, the communication unit 1001 is further configured to receive fourth information from the first node, where the fourth information indicates to disable functions of sending and receiving the first packet by all or some ECUs in a vehicle.

For technical effects brought by this design and any possible implementation, refer to the descriptions of the technical effect corresponding to FIG. 7 and the corresponding implementations.

Optionally, in any possible design of the communication apparatus 100 shown in FIG. 10,
in an implementation, the communication apparatus is a communication device. When the communication apparatus is a communication device, the communication unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip (system) or a circuit used in a communication device. When the communication apparatus is a chip (system) or a circuit used in a communication device, the communication unit may be a communication interface (input/output interface), an interface circuit, an output circuit, an input circuit, a pin, a related circuit, or the like on the chip (system) or the circuit. The processing unit may be at least one processor, a processing circuit, a logic circuit, or the like.

According to embodiments of this application, the units in the apparatus shown in FIG. 10 may be separately or all combined into one or more other units, or one or more units in the apparatus may be further split into a plurality of units with more detailed functions. This can implement a same operation without affecting implementation of technical effects of this embodiment of this application. The foregoing units are obtained through division based on logical functions. In actual application, a function of one unit may be implemented by a plurality of units, or functions of a plurality of units are implemented by one unit. In another embodiment of this application, an electronic device may alternatively include another unit. In actual application, the functions may be implemented with assistance of the another unit, and may be implemented by a plurality of units in collaboration.

It should be noted that, for implementations of the units, refer to the corresponding descriptions of the method embodiment shown in FIG. 7.

In the communication apparatus 100 described in FIG. 10, a normal service function of another ECU on which OTA update is not performed can be ensured in a process of performing OTA update on some ECUs.

FIG. 11 is a diagram of a structure of a communication apparatus according to an embodiment of this application.

It should be understood that the communication apparatus 110 shown in FIG. 11 is merely an example. The communication apparatus in embodiments of this application may further include other components, may include components having functions similar to those of the components in FIG. 11, or may not necessarily include all the components in FIG. 11.

The communication apparatus 110 includes a communication interface 1101 and at least one processor 1102.

The communication apparatus 110 may correspond to any node or device in the first node or the second node. The communication interface 1101 is configured to receive and send a signal, and the at least one processor 1102 executes program instructions, so that the communication apparatus 110 is enabled to implement a corresponding procedure of the method performed by a corresponding device in the method embodiment.

In a possible design, the communication apparatus 110 may correspond to the first node in the method embodiment shown in FIG. 7. For example, the communication apparatus 110 may be the first node, or may be a chip in the first node. The communication apparatus 110 may include components configured to perform the operations performed by the first node in the method embodiment. In addition, the components in the communication apparatus 110 are separately configured to implement the operations performed by the first node in the method embodiment. Details may be as follows.

The first node sends first information, where the first information indicates to disable a function of receiving and sending a first packet by a first ECU.

The first node sends second information, where the second information is used to perform over the air OTA update on the first ECU.

When OTA update is performed on the first ECU, a function of receiving and sending the first packet by the first ECU is disabled, a function of receiving and sending the first packet by a second ECU is enabled, and the second ECU is different from the first ECU.

In a possible implementation, a processing priority of an update packet corresponding to OTA update is lower than a processing priority of the first packet.

In a possible implementation, a vehicle further includes a third node, the third node is different from a second node, and the second ECU is an ECU connected to the third node.

In a possible implementation, the first information further indicates to disable a function of receiving and sending the first packet by the second node.

In a possible implementation, the first ECU is an ECU connected to a first in-vehicle wired network, the second ECU is an ECU connected to a second in-vehicle wired network, and the first in-vehicle wired network and the second in-vehicle wired network are two different in-vehicle wired networks connected to the second node.

In a possible implementation, the first in-vehicle wired network and the second in-vehicle wired network correspond to a same wired network standard, for example, both are controller area networks CANs or both are Ethernet.

In a possible implementation, the method further includes: the first node sends third information, where the third information indicates to disable a function of receiving and sending, by the second node, a first packet corresponding to a first in-vehicle wired network.

In a possible implementation, the third information further indicates to enable a function of receiving and sending, by the second node, a first packet corresponding to a second in-vehicle wired network.

In a possible implementation, the first information includes at least a first field and a second field, the first field indicates whether a function of receiving and sending the first packet by an ECU connected to the second node is disabled, and the second field indicates whether a function of receiving and sending the first packet by an ECU connected to the third node is disabled.

In a possible implementation, the method further includes: the first node sends fourth information, where the fourth information indicates to disable functions of sending and receiving the first packet by all or some ECUs in the vehicle.

For the technical effect brought by this design and any possible implementation, refer to the descriptions of the technical effect corresponding to FIG. 7 and the corresponding implementations.

In another possible design, the communication apparatus 110 may correspond to the second node in the method embodiment shown in FIG. 7. For example, the communication apparatus 110 may be the second node, or may be a chip in the second node. The communication apparatus 110 may include components configured to perform the operations performed by the second node in the method embodiment. In addition, the components in the communication apparatus 110 are separately configured to implement the operations performed by the second node in the method embodiment. Details may be as follows.

The second node receives first information from a first node, where the first information indicates to disable a function of receiving and sending a first packet by a first ECU.

The second node receives second information from the first node, where the second information is used to perform over the air OTA update on the first ECU.

When OTA update is performed on the first ECU, a function of receiving and sending the first packet by the first ECU is disabled, a function of receiving and sending the first packet by a second ECU is enabled, and the second ECU is different from the first ECU.

In a possible implementation, a processing priority of an update packet corresponding to OTA update is lower than a processing priority of the first packet.

In a possible implementation, a vehicle further includes a third node, the third node is different from the second node, and the second ECU is an ECU connected to the third node.

In a possible implementation, the first information further indicates to disable a function of receiving and sending the first packet by the second node.

In a possible implementation, the first ECU is an ECU connected to a first in-vehicle wired network, the second ECU is an ECU connected to a second in-vehicle wired network, and the first in-vehicle wired network and the second in-vehicle wired network are two different in-vehicle wired networks connected to the second node.

In a possible implementation, the first in-vehicle wired network and the second in-vehicle wired network correspond to a same wired network standard, for example, both are controller area networks CANs or both are Ethernet.

In a possible implementation, the method further includes: the second node receives third information from the first node, where the third information indicates to disable a function of receiving and sending, by the second node, a first packet corresponding to a first in-vehicle wired network.

In a possible implementation, the third information further indicates to enable a function of receiving and sending, by the second node, a first packet corresponding to a second in-vehicle wired network.

In a possible implementation, the first information includes at least a first field and a second field, the first field indicates whether a function of receiving and sending the first packet by an ECU connected to the second node is disabled, and the second field indicates whether a function of receiving and sending the first packet by an ECU connected to the third node is disabled.

In a possible implementation, the method further includes: the second node receives fourth information from the first node, where the fourth information indicates to disable functions of sending and receiving the first packet by all or some ECUs in the vehicle.

For the technical effect brought by this design and any possible implementation, refer to the descriptions of the technical effect corresponding to FIG. 7 and the corresponding implementations.

In the communication apparatus 110 described in FIG. 11, a normal service function of another ECU on which OTA update is not performed can be ensured in a process of performing OTA update on some ECUs.

For a case in which the communication apparatus may be a chip or a chip system, refer to a diagram of a structure of a chip shown in FIG. 12.

As shown in FIG. 12, the chip 120 includes a processor 1201 and an interface 1202. There may be one or more processors 1201. There may be a plurality of interfaces 1202. It should be noted that a function corresponding to each of the processor 1201 and the interface 1202 may be implemented by using a hardware design, or may be implemented by using a software design, or may be implemented in a combination of software and hardware. This is not limited herein.

Optionally, the chip 120 may further include a memory 1203, and the memory 1203 is configured to store necessary program instructions and data.

In this application, the processor 1201 may be configured to: invoke, from the memory 1203, an implementation program of the communication method provided in one or more embodiments of this application on one or more devices or nodes of the first node and the second node, and execute instructions included in the program. The interface 1202 may be configured to output an execution result of the processor 1201. In this application, the interface 1202 may be specifically configured to output messages or information of the processor 1201.

For the update method provided in one or more embodiments of this application, refer to the foregoing embodiment shown in FIG. 7. Details are not described herein again.

The processor in this embodiment of this application may be a central processing unit (Central Processing Unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA), another programmable logic device, a discrete gate or a transistor logic device, a discrete hardware component, or the like. The general-purpose processor may be a microprocessor, or the processor may be any conventional processor or the like.

The memory in embodiments of this application is configured to provide storage space, and the storage space may store data such as an operating system and a computer program. The memory includes but is not limited to a random access memory (random access memory, RAM), a read-only memory (read-only memory, ROM), an erasable programmable read-only memory (erasable programmable read only memory, EPROM), or a compact disc read-only memory (compact disc read-only memory, CD-ROM).

According to the method provided in embodiments of this application, an embodiment of this application further provides a computer-readable storage medium. The computer-readable storage medium stores a computer program. When the computer program is run on one or more processors, the method shown in FIG. 7 may be implemented.

According to the method provided in embodiments of this application, an embodiment of this application further provides a computer program product. The computer program product includes a computer program. When the computer program is run on a processor, the method shown in FIG. 7 may be implemented.

An embodiment of this application further provides a system. The system includes at least one of the communication apparatus 100, the communication apparatus 110, and the chip 120, and is configured to perform steps performed by a corresponding device in any embodiment of FIG. 7.

An embodiment of this application further provides a system. The system includes a first node and a second node. The first node is configured to perform steps performed by the first node in any embodiment in FIG. 7, and the second node is configured to perform steps performed by the second node in any embodiment in FIG. 7.

An embodiment of this application further provides a processing apparatus, including a processor and an interface. The processor is configured to perform the method in any one of the foregoing method embodiments.

It should be understood that the processing apparatus may be a chip. For example, the processing apparatus may be a field programmable gate array (field programmable gate array, FPGA), or may be a general purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, may be a system on chip (system on chip, SoC), may be a central processing unit (central processor unit, CPU), may be a network processor (network processor, NP), may be a digital signal processor (digital signal processor, DSP), may be a micro controller unit (micro controller unit, MCU), and may be a programmable logic device (programmable logic device, PLD) or another integrated chip. The methods, the steps, and logical block diagrams that are disclosed in embodiments of this application may be implemented or performed. The general-purpose processor may be a microprocessor, or the processor may be any conventional processor or the like. The steps of the methods disclosed with reference to embodiments of this application may be directly executed and accomplished by a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that, in embodiments of this application, the memory may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state disk (solid state disc, SSD)), or the like.

The units in the apparatus embodiments completely correspond to the electronic devices in the method embodiments. A corresponding module or unit performs a corresponding step. For example, a communication unit (transceiver) performs a receiving step or a sending step in the method embodiments, and a processing unit (processor) may perform another step other than the sending step and the receiving step. For a specific function of the unit, refer to the corresponding method embodiments. There may be one or more processors.

It may be understood that in embodiments of this application, the electronic device may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be performed.

A person of ordinary skill in the art may be aware that, units and algorithm steps in the examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief descriptions, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions in embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. An update method, applied to a vehicle, wherein the vehicle comprises a first node, a second node, a first electronic control unit ECU, and a second electronic control unit ECU, the first ECU is connected to the second node, and the method comprises:
sending, by the first node, first information, wherein the first information indicates to disable a function of receiving and sending a first packet by the first ECU; and
sending, by the first node, second information, wherein the second information is used to perform over the air OTA update on the first ECU, wherein
when OTA update is performed on the first ECU, the function of receiving and sending the first packet by the first ECU is disabled, a function of receiving and sending the first packet by the second ECU is enabled, and the second ECU is different from the first ECU.

2. The method according to claim 1, wherein a processing priority of an update packet corresponding to OTA update is lower than a processing priority of the first packet.

3. The method according to claim 1 or 2, wherein the vehicle further comprises a third node, the third node is different from the second node, and the second ECU is an ECU connected to the third node.

4. The method according to any one of claims 1 to 3, wherein the first information further indicates to disable a function of receiving and sending the first packet by the second node.

5. The method according to claim 1 or 2, wherein the first ECU is an ECU connected to a first in-vehicle wired network, the second ECU is an ECU connected to a second in-vehicle wired network, and the first in-vehicle wired network and the second in-vehicle wired network are two different in-vehicle wired networks connected to the second node.

6. The method according to claim 5, wherein the method further comprises:
sending, by the first node, third information, wherein the third information indicates to disable a function of receiving and sending, by the second node, a first packet corresponding to the first in-vehicle wired network.

7. The method according to claim 5 or 6, wherein the third information indicates to enable a function of receiving and sending, by the second node, a first packet corresponding to the second in-vehicle wired network.

8. The method according to any one of claims 1 to 7, wherein the first information comprises at least a first field and a second field, the first field indicates whether a function of receiving and sending the first packet by an ECU connected to the second node is disabled, and the second field indicates whether a function of receiving and sending the first packet by an ECU connected to the third node is disabled.

9. The method according to any one of claims 1 to 8, wherein the method further comprises:
sending, by the first node, fourth information, wherein the fourth information indicates to disable functions of sending and receiving the first packet by all or some ECUs in the vehicle.

10. An update method, applied to a vehicle, wherein the vehicle comprises a first node, a second node, a first electronic control unit ECU, and a second electronic control unit ECU, the first ECU is connected to the second node, and the method comprises:
receiving, by the second node, first information from the first node, wherein the first information indicates to disable a function of receiving and sending a first packet by the first ECU; and
receiving, by the second node, second information from the first node, wherein the second information is used to perform over the air OTA update on the first ECU, wherein
when OTA update is performed on the first ECU, the function of receiving and sending the first packet by the first ECU is disabled, a function of receiving and sending the first packet by the second ECU is enabled, and the second ECU is different from the first ECU.

11. The method according to claim 10, wherein a processing priority of an update packet corresponding to OTA update is lower than a processing priority of the first packet.

12. The method according to claim 10 or 11, wherein the vehicle further comprises a third node, the third node is different from the second node, and the second ECU is an ECU connected to the third node.

13. The method according to any one of claims 10 to 12, wherein the first information further indicates to disable a function of receiving and sending the first packet by the second node.

14. The method according to claim 10 or 11, wherein the first ECU is an ECU connected to a first in-vehicle wired network, the second ECU is an ECU connected to a second in-vehicle wired network, and the first in-vehicle wired network and the second in-vehicle wired network are two different in-vehicle wired networks connected to the second node.

15. The method according to claim 14, wherein the method further comprises:
receiving, by the second node, third information from the first node, wherein the third information indicates to disable a function of receiving and sending, by the second node, a first packet corresponding to the first in-vehicle wired network.

16. The method according to claim 14 or 15, wherein the third information indicates to enable a function of receiving and sending, by the second node, a first packet corresponding to the second in-vehicle wired network.

17. The method according to any one of claims 10 to 16, wherein the first information comprises at least a first field and a second field, the first field indicates whether a function of receiving and sending the first packet by an ECU connected to the second node is disabled, and the second field indicates whether a function of receiving and sending the first packet by an ECU connected to the third node is disabled.

18. The method according to any one of claims 10 to 17, wherein the method further comprises:
receiving, by the second node, fourth information from the first node, wherein the fourth information indicates to disable functions of sending and receiving the first packet by all or some ECUs in the vehicle.

19. A communication apparatus, comprising a module or a unit configured to perform the method according to any one of claims 1 to 9 or claims 10 to 18.

20. A communication apparatus, comprising a processor, wherein
when the processor invokes a computer program or instructions in a memory, the method according to any one of claims 1 to 9 or the method according to any one of claims 10 to 18 is performed.

21. A communication apparatus, comprising a logic circuit and an interface, wherein the logic circuit is coupled to the interface; and
the interface is configured to input to-be-processed data, the logic circuit processes the to-be-processed data according to the method according to any one of claims 1 to 9 or the method according to any one of claims 10 to 18, to obtain processed data, and the interface is configured to output the processed data.

22. A computer-readable storage medium, wherein
the computer-readable storage medium is configured to store instructions or a computer program; and when the instructions or the computer program are/is executed, the method according to any one of claims 1 to 9 or the method according to any one of claims 10 to 18 is implemented.

23. A computer program product, comprising instructions or a computer program, wherein
when the instructions or the computer program are/is executed, the method according to any one of claims 1 to 9 or the method according to any one of claims 10 to 18 is performed.

24. A vehicle end, comprising the communication apparatus according to claim 19, or the communication apparatus according to claim 20, or the communication apparatus according to claim 21.

25. A system, comprising a first node and a second node, wherein
the first node is configured to perform the method according to any one of claims 1 to 9, and the second node is configured to perform the method according to any one of claims 10 to 18.
